(19) **Europäisches Patentamt European Patent Office Office européen des brevets**

(11) **EP 4 107 539 B1**

(12) **EUROPEAN PATENT SPECIFICATION**

(45) Date of publication and mention of the grant of the patent:
**21.05.2025 Bulletin 2025/21**

(21) Application number: **20842448.1**

(22) Date of filing: **17.12.2020**

(51) International Patent Classification (IPC):
*G01S 5/00* (2006.01)    *H04W 64/00* (2009.01)

(52) Cooperative Patent Classification (CPC):
**H04W 64/00; G01S 5/0036**

(86) International application number:
**PCT/US2020/065718**

(87) International publication number:
**WO 2021/167690 (26.08.2021 Gazette 2021/34)**

(54) **METHODS AND APPARATUS FOR PARTIAL POSITIONING STATE INFORMATION (PSI) OMISSION RULES FOR LOWER LAYER TRANSMISSION**

VERFAHREN UND VORRICHTUNG FÜR PARTIELLE POSITIONIERUNGSZUSTANDSINFORMATIONEN OMISIONSREGELN FÜR DIE ÜBERTRAGUNG AUF DER UNTEREN SCHICHT

PROCÉDÉS ET APPAREILS DESTINÉS À L'OMISSION PARTIELLE D'INFORMATIONS DE POSITIONNEMENT PARTIELLES LORS DE L'ENVOI SUR UNE COUCHE INFÉRIEURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.02.2020 GR 20200100084**

(43) Date of publication of application:
**28.12.2022 Bulletin 2022/52**

(73) Proprietor: **QUALCOMM INCORPORATED**
San Diego, California 92121-1714 (US)

(72) Inventors:
• **MANOLAKOS, Alexandros**
San Diego, California 92121-1714 (US)
• **MUKKAVILLI, Krishna Kiran**
San Diego, California 92121-1714 (US)
• **JI, Tingfang**
San Diego, California 92121-1714 (US)

(74) Representative: **Reddie & Grose LLP**
The White Chapel Building
10 Whitechapel High Street
London E1 8QS (GB)

(56) References cited:
EP-A1- 3 739 942      WO-A1-2019/137477
US-A1- 2010 323 719      US-A1- 2017 289 831
US-A1- 2018 199 306

• **SPREADTRUM COMMUNICATIONS: "Discussion on Multi-TRP transmission", vol. RAN WG1, no. Taipei; 20190121 - 20190125, 20 January 2019 (2019-01-20), XP051593558, Retrieved from the Internet <URL:http://www.3gpp.org/ftp/Meetings %5F3GPP%5FSYNC/RAN1/Docs/R1% 2D1900711%2Ezip> [retrieved on 20190120]**
• **MITSUBISHI ELECTRIC: "Views on DL reference signal designs for NR positioning", vol. RAN WG1, no. Reno, USA; 20191118 - 20191122, 8 November 2019 (2019-11-08), XP051820208, Retrieved from the Internet <URL:https:// ftp.3gpp.org/tsg_ran/WG1_RL1/TSGR1_99/Docs/ R1-1912836.zip R1-1912836-positioning_DL_A.docx> [retrieved on 20191108]**
• **CATT: "NR Positioning with DL/UL Measurements", vol. RAN WG1, no. Taipei; 20190121 - 20190125, 20 January 2019 (2019-01-20), XP051593226, Retrieved from the Internet <URL:http://www.3gpp.org/ftp/Meetings %5F3GPP%5FSYNC/RAN1/Docs/R1% 2D1900312%2Ezip> [retrieved on 20190120]**

# EP 4 107 539 B1

**Description**

**BACKGROUND OF THE DISCLOSURE**

*1. Field of the Disclosure*

Aspects of the disclosure relate generally to wireless communications and the like.

*2. Description of the Related Art*

Wireless communication systems have developed through various generations, including a first-generation analog wireless phone service (1G), a second-generation (2G) digital wireless phone service (including interim 2.5G networks), a third-generation (3G) high speed data, Internet-capable wireless service, and a fourth-generation (4G) service (e.g., Long-Term Evolution (LTE), WiMax). There are presently many different types of wireless communication systems in use, including cellular and personal communications service (PCS) systems. Examples of known cellular systems include the cellular Analog Advanced Mobile Phone System (AMPS), and digital cellular systems based on code division multiple access (CDMA), frequency division multiple access (FDMA), time division multiple access (TDMA), the Global System for Mobile access (GSM) variation of TDMA, etc.

A fifth generation (5G) mobile standard calls for higher data transfer speeds, greater numbers of connections, and better coverage, among other improvements. The 5G standard (also referred to as "New Radio" or "NR"), according to the Next Generation Mobile Networks Alliance, is designed to provide data rates of several tens of megabits per second to each of tens of thousands of users, with 1 gigabit per second to tens of workers on an office floor. Several hundreds of thousands of simultaneous connections should be supported in order to support large sensor deployments. Consequently, the spectral efficiency of 5G mobile communications should be significantly enhanced compared to the current 4G / LTE standard. Furthermore, signaling efficiencies should be enhanced and latency should be substantially reduced compared to current standards.

US2018/199306 describes ways in which a quantity of signaling may be limited between a user equipment and a location server for a location session and a positioning protocol such as LPP or LPP/LPPe. The positioning protocol may be enhanced to allow the LS to indicate to the UE a limit on the overall size of assistance data (AD) that the UE can request and/or a limit on the overall amount of location information (LI) that the UE can return. A recipient UE can then prioritize any request for AD such that more important AD should fit within the size limit. The recipient UE can also prioritize returned location measurements such that more useful measurements are included in a message to the LS that is compliant to the limit indicated by the LS.

WO2019/137477 describes a measurement reporting method including measuring a corresponding reference signal according to a downlink measurement configuration of a network device, where the downlink measurement configuration includes at least one of content information of measurement report, measured reference signal resource related information and an association relationship information of reference signal resource and measurement report; generating at least one measurement report, based on at least one of the content information of measurement report, the measured reference signal resource related information, the association relationship information of reference signal resource and measurement report and measurement results of reference signal; and sending the at least one measurement report.

US2017/289831 describes a method for performing positioning by a UE in a wireless communication system. The method includes receiving assistance data including reference cell information and neighbor cell information from a serving BS, the reference cell information and the neighbor cell information including channel state information-reference signal (CSI-RS) configuration information for measurement related CSI-RS-based positioning; receiving a CSI-RS from each of a reference cell and at least one neighbor cell on the basis of the received assistance data; measuring a reference signal time difference (RSTD) regarding the reference cell of the at least one neighbor cell using the received CSI-RS; and reporting the measured RSTD to the serving BS.

R1-19007111 "Discussion on Multi-TRP transmission" Spreadtrum Communications, 3GPP TSG RAN WG1 Meeting #AH1901. Taipei 21-25 January 2019 describes agreements on multi-TRP/panel for eMBB and URLLC achieved in RAN1 #95 meeting.

**SUMMARY**

The invention is defined in the appended independent claims. Optional features are defined in the dependent claims.

2

## BRIEF DESCRIPTION OF THE DRAWINGS

The accompanying drawings are presented to aid in the description of various aspects of the disclosure and are provided solely for illustration of the aspects and not limitation thereof.

FIG. 1 illustrates an exemplary wireless communications system, according to various aspects of the disclosure.

FIGS. 2A and 2B illustrate example wireless network structures, according to various aspects of the disclosure.

FIG. 3 illustrates a block diagram of a design of base station and user equipment (UE), which may be one of the base stations and one of the UEs in Fig. 1.

FIG. 4 is a diagram of a structure of an exemplary subframe sequence with positioning reference signal (PRS) positioning occasions.

FIG. 5 is a block diagram illustrating a UE configured to order and omit low priority Positioning State Information (PSI) report elements in a PSI report to be transmitted on a lower layer channel, according to the disclosure herein.

FIG. 6 is a block diagram illustrating a UE and network entity configured to respectively transmit and receive on a lower layer channel a PSI report with PSI report elements ordered based on priority with low priority PSI report elements omitted from the PSI report, according to the disclosure herein

FIG. 7 is a message flow with various messages sent between components of a wireless communication system, illustrating the ordering and omission of low priority PSI report elements in a PSI report transmitted on a lower layer channel, according to the disclosure herein.

FIG. 8 is a flowchart for an exemplary method for wireless communications for a UE in which the UE orders and omits PSI report elements from a PSI report according to priority based rules and transmits the PSI report on a lower layer channel in a manner consistent with disclosed implementation.

FIG. 9 is a flowchart for an exemplary method for wireless communications for a UE in which a network entity receives a PSI report on a lower layer channel that includes PSI report elements ordered according to priority based rules consistent with disclosed implementation.

FIG. 10 is a schematic block diagram illustrating certain exemplary features of a UE enabled to order and omit low priority PSI report elements in a PSI report that is transmitted on a lower layer channel, according to the disclosure herein.

FIG. 11 shows a schematic block diagram illustrating certain exemplary features of a network entity enabled to support wireless communications with a UE to order and omit low priority PSI report elements in a PSI report that is transmitted on a lower layer channel.

## DETAILED DESCRIPTION

Aspects of the disclosure are provided in the following description and related drawings directed to various examples provided for illustration purposes. Alternate aspects may be devised without departing from the scope of the disclosure. Additionally, well-known elements of the disclosure will not be described in detail or will be omitted so as not to obscure the relevant details of the disclosure.

The words "exemplary" and/or "example" are used herein to mean "serving as an example, instance, or illustration." Any aspect described herein as "exemplary" and/or "example" is not necessarily to be construed as preferred or advantageous over other aspects. Likewise, the term "aspects of the disclosure" does not require that all aspects of the disclosure include the discussed feature, advantage or mode of operation.

Those of skill in the art will appreciate that the information and signals described below may be represented using any of a variety of different technologies and techniques. For example, data, instructions, commands, information, signals, bits, symbols, and chips that may be referenced throughout the description below may be represented by voltages, currents, electromagnetic waves, magnetic fields or particles, optical fields or particles, or any combination thereof, depending in part on the particular application, in part on the desired design, in part on the corresponding technology, etc.

Further, many aspects are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, the sequence(s) of actions described herein can be considered to be embodied entirely within any form of non-transitory computer-readable storage medium having stored therein a corresponding set of computer instructions that, upon execution, would cause or instruct an associated processor of a device to perform the functionality described herein. Thus, the various aspects of the disclosure may be embodied in a number of different forms, all of which have been contemplated to be within the scope of the claimed subject matter. In addition, for each of the aspects described herein, the corresponding form of any such aspects may be described herein as, for example, "logic configured to" perform the described action.

As used herein, the terms "user equipment" (UE) and "base station" are not intended to be specific or otherwise limited to any particular Radio Access Technology (RAT), unless otherwise noted. In general, a UE may be any wireless communication device (e.g., a mobile phone, router, tablet computer, laptop computer, tracking device, wearable (e.g., smartwatch, glasses, augmented reality (AR) / virtual reality (VR) headset, etc.), vehicle (e.g., automobile, motorcycle, bicycle, etc.), Internet of Things (IoT) device, etc.) used by a user to communicate over a wireless communications network. A UE may be mobile or may (e.g., at certain times) be stationary, and may communicate with a Radio Access Network (RAN). As used herein, the term "UE" may be referred to interchangeably as an "access terminal" or "AT," a "client device," a "wireless device," a "subscriber device," a "subscriber terminal," a "subscriber station," a "user terminal" or UT, a "mobile terminal," a "mobile station," or variations thereof. Generally, UEs can communicate with a core network via a RAN, and through the core network the UEs can be connected with external networks such as the Internet and with other UEs. Of course, other mechanisms of connecting to the core network and/or the Internet are also possible for the UEs, such as over wired access networks, wireless local area network (WLAN) networks (e.g., based on IEEE 802.11, etc.) and so on.

A base station may operate according to one of several RATs in communication with UEs depending on the network in which it is deployed, and may be alternatively referred to as an access point (AP), a network node, a NodeB, an evolved NodeB (eNB), a New Radio (NR) Node B (also referred to as a gNB or gNodeB), etc. In addition, in some systems a base station may provide purely edge node signaling functions while in other systems it may provide additional control and/or network management functions. A communication link through which UEs can send signals to a base station is called an uplink (UL) channel (e.g., a reverse traffic channel, a reverse control channel, an access channel, etc.). A communication link through which the base station can send signals to UEs is called a downlink (DL) or forward link channel (e.g., a paging channel, a control channel, a broadcast channel, a forward traffic channel, etc.). As used herein the term traffic channel (TCH) can refer to either an UL / reverse or DL / forward traffic channel.

The term "base station" may refer to a single physical transmission point or to multiple physical transmission points that may or may not be co-located. For example, where the term "base station" refers to a single physical transmission point, the physical transmission point may be an antenna of the base station corresponding to a cell of the base station. Where the term "base station" refers to multiple co-located physical transmission points, the physical transmission points may be an array of antennas (e.g., as in a multiple-input multiple-output (MIMO) system or where the base station employs beamforming) of the base station. Where the term "base station" refers to multiple non-co-located physical transmission points, the physical transmission points may be a distributed antenna system (DAS) (a network of spatially separated antennas connected to a common source via a transport medium) or a remote radio head (RRH) (a remote base station connected to a serving base station). Alternatively, the non-co-located physical transmission points may be the serving base station receiving the measurement report from the UE and a neighbor base station whose reference RF signals the UE is measuring.

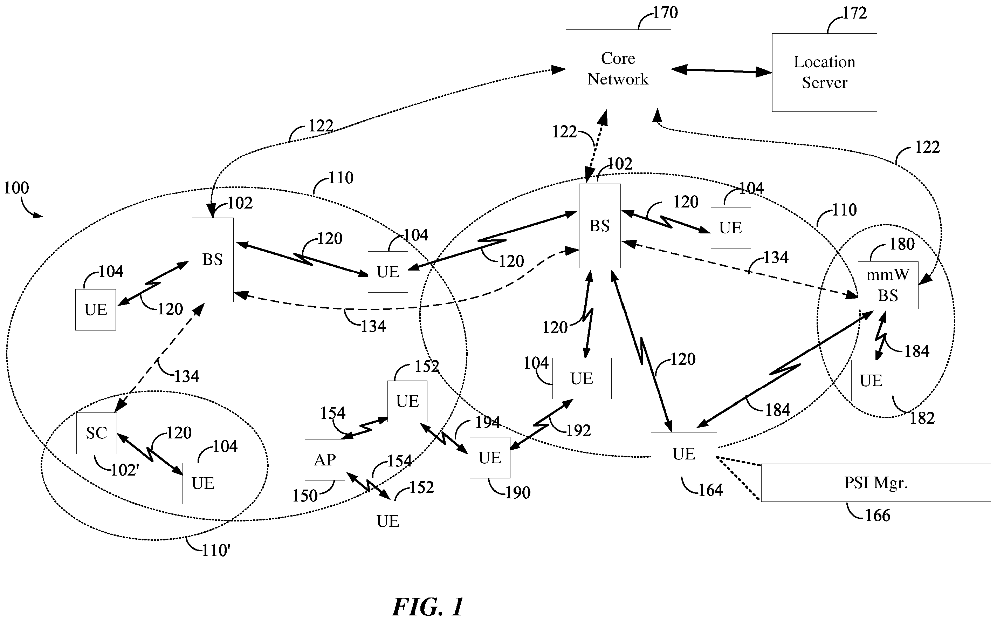

**FIG. 1** illustrates an exemplary wireless communications system 100. The wireless communications system 100 (which may also be referred to as a wireless wide area network (WWAN)) may include various base stations 102 and various UEs 104. The base stations 102 may include macro cell base stations (high power cellular base stations) and/or small cell base stations (low power cellular base stations). In an aspect, the macro cell base station may include eNBs where the wireless communications system 100 corresponds to an LTE network, or gNBs where the wireless communications system 100 corresponds to a 5G network, or a combination of both, and the small cell base stations may include femtocells, picocells, microcells, etc.

The base stations 102 may collectively form a RAN and interface with a core network 170 (e.g., an evolved packet core (EPC) or next generation core (NGC)) through backhaul links 122, and through the core network 170 to one or more location servers 172. In addition to other functions, the base stations 102 may perform functions that relate to one or more of transferring user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, RAN sharing, multimedia broadcast multicast service (MBMS), subscriber and equipment trace, RAN information management (RIM), paging, positioning, and delivery of warning messages. The base stations 102 may communicate with each other directly or indirectly (e.g., through the EPC / NGC) over backhaul links 134, which may be wired or wireless.

The base stations 102 may wirelessly communicate with the UEs 104. Each of the base stations 102 may provide communication coverage for a respective geographic coverage area 110. In an aspect, one or more cells may be supported by a base station 102 in each coverage area 110. A "cell" is a logical communication entity used for communication with a base station (e.g., over some frequency resource, referred to as a carrier frequency, component carrier, carrier, band, or the like), and may be associated with an identifier (e.g., a physical cell identifier (PCID), a virtual cell identifier (VCID)) for distinguishing cells operating via the same or a different carrier frequency. In some cases, different cells may be configured according to different protocol types (e.g., machine-type communication (MTC), narrowband IoT (NB-IoT), enhanced mobile broadband (eMBB), or others) that may provide access for different types of UEs. In some cases, the term "cell" may also refer to a geographic coverage area of a base station (e.g., a sector), insofar as a carrier frequency can be detected and used for communication within some portion of geographic coverage areas 110.

While neighboring macro cell base station 102 geographic coverage areas 110 may partially overlap (e.g., in a handover region), some of the geographic coverage areas 110 may be substantially overlapped by a larger geographic coverage area 110. For example, a small cell base station 102' may have a coverage area 110' that substantially overlaps with the coverage area 110 of one or more macro cell base stations 102. A network that includes both small cell and macro cell base stations may be known as a heterogeneous network. A heterogeneous network may also include home eNBs (HeNBs), which may provide service to a restricted group known as a closed subscriber group (CSG).

The communication links 120 between the base stations 102 and the UEs 104 may include UL (also referred to as reverse link) transmissions from a UE 104 to a base station 102 and/or downlink (DL) (also referred to as forward link) transmissions from a base station 102 to a UE 104. The communication links 120 may use MIMO antenna technology, including spatial multiplexing, beamforming, and/or transmit diversity. The communication links 120 may be through one or more carrier frequencies. Allocation of carriers may be asymmetric with respect to DL and UL (e.g., more or less carriers may be allocated for DL than for UL).

The wireless communications system 100 may further include a wireless local area network (WLAN) access point (AP) 150 in communication with WLAN stations (STAs) 152 via communication links 154 in an unlicensed frequency spectrum (e.g., 5 GHz). When communicating in an unlicensed frequency spectrum, the WLAN STAs 152 and/or the WLAN AP 150 may perform a clear channel assessment (CCA) prior to communicating in order to determine whether the channel is available.

The small cell base station 102' may operate in a licensed and/or an unlicensed frequency spectrum. When operating in an unlicensed frequency spectrum, the small cell base station 102' may employ LTE or 5G technology and use the same 5 GHz unlicensed frequency spectrum as used by the WLAN AP 150. The small cell base station 102', employing LTE / 5G in an unlicensed frequency spectrum, may boost coverage to and/or increase capacity of the access network. LTE in an unlicensed spectrum may be referred to as LTE-unlicensed (LTE-U), licensed assisted access (LAA), or MulteFire.

The wireless communications system 100 may further include a millimeter wave (mmW) base station 180 that may operate in mmW frequencies and/or near mmW frequencies in communication with a UE 182. Extremely high frequency (EHF) is part of the RF in the electromagnetic spectrum. EHF has a range of 30 GHz to 300 GHz and a wavelength between 1 millimeter and 10 millimeters. Radio waves in this band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW/near mmW radio frequency band have high path loss and a relatively short range. The mmW base station 180 and the UE 182 may utilize beamforming (transmit and/or receive) over a mmW communication link 184 to compensate for the extremely high path loss and short range. Further, it will be appreciated that in alternative configurations, one or more base stations 102 may also transmit using mmW or near mmW and beamforming. Accordingly, it will be appreciated that the foregoing illustrations are merely examples and should not be construed to limit the various aspects disclosed herein.

Transmit beamforming is a technique for focusing an RF signal in a specific direction. Traditionally, when a network node (e.g., a base station) broadcasts an RF signal, it broadcasts the signal in all directions (omni-directionally). With transmit beamforming, the network node determines where a given target device (e.g., a UE) is located (relative to the transmitting network node) and projects a stronger downlink RF signal in that specific direction, thereby providing a faster (in terms of data rate) and stronger RF signal for the receiving device(s). To change the directionality of the RF signal when transmitting, a network node can control the phase and relative amplitude of the RF signal at each of the one or more transmitters that are broadcasting the RF signal. For example, a network node may use an array of antennas (referred to as a "phased array" or an "antenna array") that creates a beam of RF waves that can be "steered" to point in different directions, without actually moving the antennas. Specifically, the RF current from the transmitter is fed to the individual antennas with the correct phase relationship so that the radio waves from the separate antennas add together to increase the radiation in a desired direction, while cancelling to suppress radiation in undesired directions.

In receive beamforming, the receiver uses a receive beam to amplify RF signals detected on a given channel. For example, the receiver can increase the gain setting and/or adjust the phase setting of an array of antennas in a particular direction to amplify (e.g., to increase the gain level of) the RF signals received from that direction. Thus, when a receiver is said to beamform in a certain direction, it means the beam gain in that direction is high relative to the beam gain along other directions, or the beam gain in that direction is the highest compared to the beam gain in that direction of all other receive beams available to the receiver. This results in a stronger received signal strength (e.g., reference signal received power (RSRP), reference signal received quality (RSRQ), signal-to-interference-plus-noise ratio (SINR), etc.) of the RF signals received from that direction.

In 5G, the frequency spectrum in which wireless nodes (e.g., base stations 102/180, UEs 104/182) operate is divided into multiple frequency ranges, FR1 (from 450 to 6000 MHz), FR2 (from 24250 to 52600 MHz), FR3 (above 52600 MHz), and FR4 (between FR1 and FR2). In a multi-carrier system, such as 5G, one of the carrier frequencies is referred to as the "primary carrier" or "anchor carrier" or "primary serving cell" or "PCell," and the remaining carrier frequencies are referred to as "secondary carriers" or "secondary serving cells" or "SCells." In carrier aggregation, the anchor carrier is the carrier operating on the primary frequency (e.g., FR1) utilized by a UE 104/182 and the cell in which the UE 104/182 either performs the initial radio resource control (RRC) connection establishment procedure or initiates the RRC connection re-establishment procedure. The primary carrier carries all common and UE-specific control channels. A secondary carrier is a carrier operating on a second frequency (e.g., FR2) that may be configured once the RRC connection is established between the UE 104 and the anchor carrier and that may be used to provide additional radio resources. The secondary carrier may contain only necessary signaling information and signals, for example, those that are UE-specific may not be present in the secondary carrier, since both primary uplink and downlink carriers are typically UE-specific. This means that different UEs 104/182 in a cell may have different downlink primary carriers. The same is true for the uplink primary carriers. The network is able to change the primary carrier of any UE 104/182 at any time. This is done, for example, to balance the load on different carriers. Because a "serving cell" (whether a PCell or an SCell) corresponds to a carrier frequency / component carrier over which some base station is communicating, the term "cell," "serving cell," "component carrier," "carrier frequency," and the like can be used interchangeably.

For example, still referring to FIG. 1, one of the frequencies utilized by the macro cell base stations 102 may be an anchor carrier (or "PCell") and other frequencies utilized by the macro cell base stations 102 and/or the mmW base station 180 may be secondary carriers ("SCells"). The simultaneous transmission and/or reception of multiple carriers enables the UE 104/182 to significantly increase its data transmission and/or reception rates. For example, two 20 MHz aggregated carriers in a multi-carrier system would theoretically lead to a two-fold increase in data rate (i.e., 40 MHz), compared to that attained by a single 20 MHz carrier.

The wireless communications system 100 may further include one or more UEs, such as UE 190, that connects indirectly to one or more communication networks via one or more device-to-device (D2D) peer-to-peer (P2P) links. In the example of FIG. 1, UE 190 has a D2D P2P link 192 with one of the UEs 104 connected to one of the base stations 102 (e.g., through which UE 190 may indirectly obtain cellular connectivity) and a D2D P2P link 194 with WLAN STA 152 connected to the WLAN AP 150 (through which UE 190 may indirectly obtain WLAN-based Internet connectivity). In an example, the D2D P2P links 192 and 194 may be supported with any well-known D2D RAT, such as LTE Direct (LTE-D), WiFi Direct (WiFi-D), Bluetooth®, and so on.

The wireless communications system 100 may further include a UE 164 that may communicate with a macro cell base station 102 over a communication link 120 and/or the mmW base station 180 over a mmW communication link 184. For example, the macro cell base station 102 may support a PCell and one or more SCells for the UE 164 and the mmW base station 180 may support one or more SCells for the UE 164. In an aspect, the UE 164 may include a PSI manager 166 that may enable the UE 164 to perform the UE operations described herein. Note that although only one UE in FIG. 1 is illustrated as having a PSI manager 166, any of the UEs in FIG. 1 may be configured to perform the UE operations described herein.

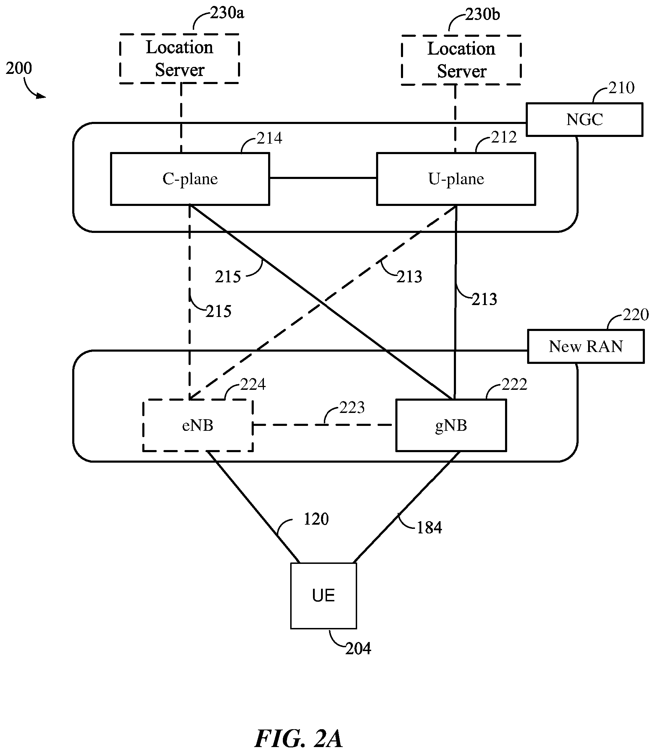

**FIG. 2A** illustrates an example wireless network structure 200. For example, an NGC 210 (also referred to as a "5GC") can be viewed functionally as control plane functions 214 (e.g., UE registration, authentication, network access, gateway selection, etc.) and user plane functions 212, (e.g., UE gateway function, access to data networks, IP routing, etc.) which operate cooperatively to form the core network. User plane interface (NG-U) 213 and control plane interface (NG-C) 215 connect the gNB 222 to the NGC 210 and specifically to the control plane functions 214 and user plane functions 212. In an additional configuration, an eNB 224 may also be connected to the NGC 210 via NG-C 215 to the control plane functions 214 and NG-U 213 to user plane functions 212. Further, eNB 224 may directly communicate with gNB 222 via a backhaul connection 223. In some configurations, the New RAN 220 may only have one or more gNBs 222, while other configurations include one or more of both eNBs 224 and gNBs 222. Either gNB 222 or eNB 224 may communicate with UEs 204 (e.g., any of the UEs depicted in FIG. 1). Another optional aspect may include one or more location servers 230a, 230b (sometimes collectively referred to as location server 230) (which may correspond to location server 172), which may be in communication with the control plane functions 214 and user plane functions 212, respectively, in the NGC 210 to provide location assistance for UEs 204. The location server 230 can be implemented as a plurality of separate servers (e.g., physically separate servers, different software modules on a single server, different software modules spread across multiple physical servers, etc.), or alternately may each correspond to a single server. The location server 230 can be configured to support one or more location services for UEs 204 that can connect to the location server 230 via the core network, NGC 210, and/or via the Internet (not illustrated). Further, the location server 230 may be integrated into a component of the core network, or alternatively may be external to the core network, e.g., in the New RAN 220.

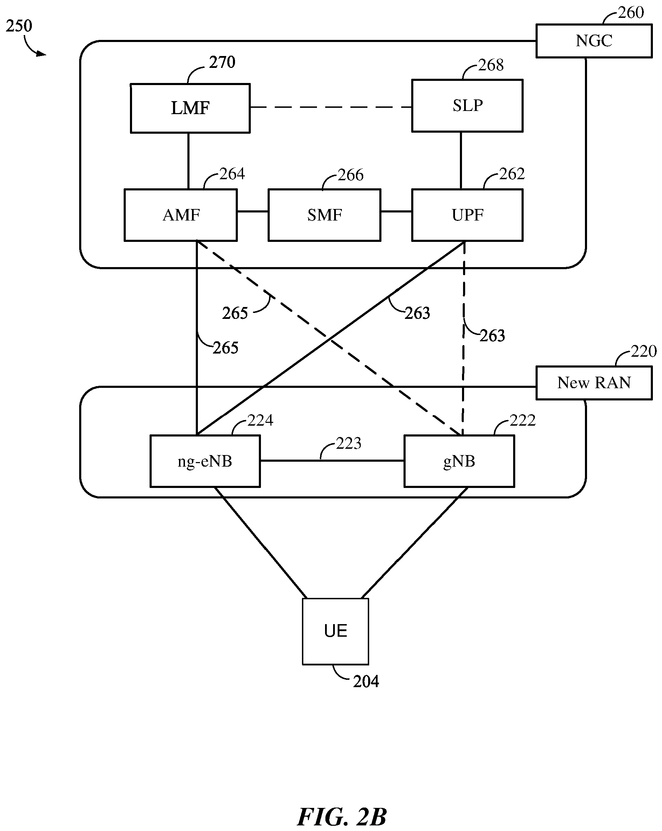

**FIG. 2B** illustrates another example wireless network structure 250. For example, an NGC 260 (also referred to as a "5GC") can be viewed functionally as control plane functions, provided by an access and mobility management function (AMF) 264, user plane function (UPF) 262, a session management function (SMF) 266, SLP 268, and an LMF 270, which operate cooperatively to form the core network (i.e., NGC 260). User plane interface 263 and control plane interface 265 connect the ng-eNB 224 to the NGC 260 and specifically to UPF 262 and AMF 264, respectively. In an additional configuration, a gNB 222 may also be connected to the NGC 260 via control plane interface 265 to AMF 264 and user plane interface 263 to UPF 262. Further, eNB 224 may directly communicate with gNB 222 via the backhaul connection 223, with or without gNB direct connectivity to the NGC 260. In some configurations, the New RAN 220 may only have one or more gNBs 222, while other configurations include one or more of both ng-eNBs 224 and gNBs 222. Either ng-gNB 222 or eNB 224 may communicate with UEs 204 (e.g., any of the UEs depicted in FIG. 1). The base stations of the New RAN 220 communicate with the AMF 264 over the N2 interface and the UPF 262 over the N3 interface.

The functions of the AMF include registration management, connection management, reachability management, mobility management, lawful interception, transport for session management (SM) messages between the UE 204 and the SMF 266, transparent proxy services for routing SM messages, access authentication and access authorization, transport for short message service (SMS) messages between the UE 204 and the short message service function (SMSF) (not shown), and security anchor functionality (SEAF). The AMF also interacts with the authentication server function (AUSF) (not shown) and the UE 204, and receives the intermediate key that was established as a result of the UE 204 authentication process. In the case of authentication based on a UMTS (universal mobile telecommunications system) subscriber identity module (USIM), the AMF retrieves the security material from the AUSF. The functions of the AMF also include security context management (SCM). The SCM receives a key from the SEAF that it uses to derive access-network specific keys. The functionality of the AMF also includes location services management for regulatory services, transport for location services messages between the UE 204 and the location management function (LMF) 270 (which may correspond to location server 172), as well as between the New RAN 220 and the LMF 270, evolved packet system (EPS) bearer identifier allocation for interworking with the EPS, and UE 204 mobility event notification. In addition, the AMF also supports functionalities for non-Third Generation Partnership Project (3GPP) access networks.

Functions of the UPF include acting as an anchor point for intra-/inter-RAT mobility (when applicable), acting as an external protocol data unit (PDU) session point of interconnect to the data network (not shown), providing packet routing and forwarding, packet inspection, user plane policy rule enforcement (e.g., gating, redirection, traffic steering), lawful interception (user plane collection), traffic usage reporting, quality of service (QoS) handling for the user plane (e.g., UL/DL rate enforcement, reflective QoS marking in the DL), UL traffic verification (service data flow (SDF) to QoS flow mapping), transport level packet marking in the UL and DL, DL packet buffering and DL data notification triggering, and sending and forwarding of one or more "end markers" to the source RAN node.

The functions of the SMF 266 include session management, UE Internet protocol (IP) address allocation and management, selection and control of user plane functions, configuration of traffic steering at the UPF to route traffic to the proper destination, control of part of policy enforcement and QoS, and downlink data notification. The interface over which the SMF 266 communicates with the AMF 264 is referred to as the N11 interface.

Another optional aspect may include an LMF 270, which may be in communication with the NGC 260 to provide location assistance for UEs 204. The LMF 270 can be implemented as a plurality of separate servers (e.g., physically separate servers, different software modules on a single server, different software modules spread across multiple physical servers, etc.), or alternately may each correspond to a single server. The LMF 270 can be configured to support one or more location services for UEs 204 that can connect to the LMF 270 via the core network, NGC 260, and/or via the Internet (not illustrated).

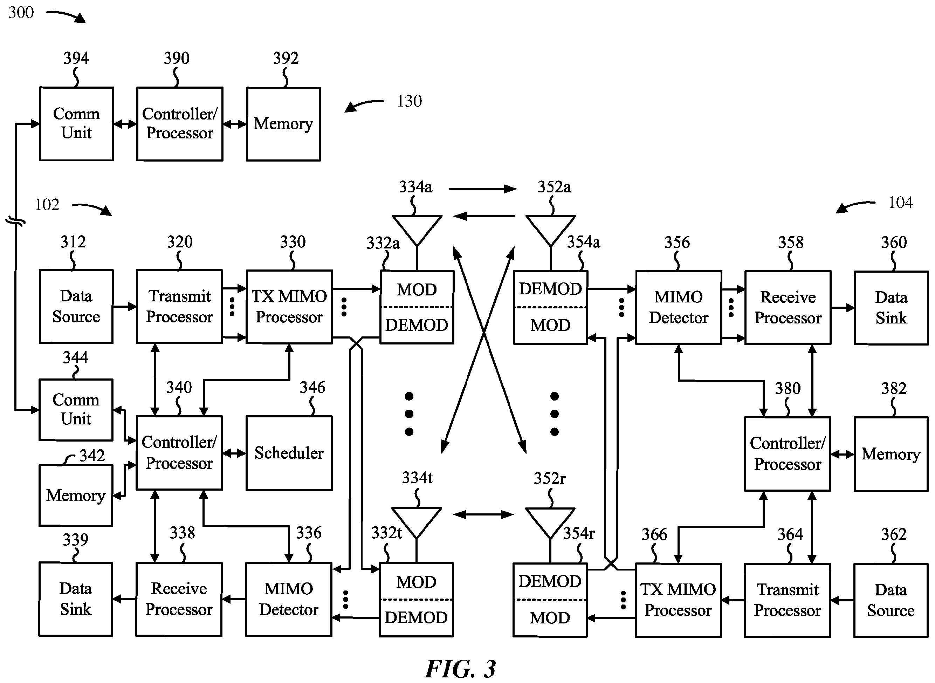

**FIG. 3** shows a block diagram of a design 300 of base station 102 and UE 104, which may be one of the base stations and one of the UEs in FIG. 1. Base station 102 may be equipped with T antennas 334a through 334t, and UE 104 may be equipped with R antennas 352a through 352r, where in general T ≥ 1 and R ≥ 1.

At base station 102, a transmit processor 320 may receive data from a data source 312 for one or more UEs, select one or more modulation and coding schemes (MCS) for each UE based at least in part on channel quality indicators (CQIs) received from the UE, process (e.g., encode and modulate) the data for each UE based at least in part on the MCS(s) selected for the UE, and provide data symbols for all UEs. Transmit processor 320 may also process system information (e.g., for semi-static resource partitioning information (SRPI) and/or the like) and control information (e.g., CQI requests, grants, upper layer signaling, and/or the like) and provide overhead symbols and control symbols. Transmit processor 320 may also generate reference symbols for reference signals (e.g., the cell-specific reference signal (CRS)) and synchronization signals (e.g., the primary synchronization signal (PSS) and secondary synchronization signal (SSS)). A transmit (TX) multiple-input multiple-output (MIMO) processor 330 may perform spatial processing (e.g., precoding) on the data symbols, the control symbols, the overhead symbols, and/or the reference symbols, if applicable, and may provide T output symbol streams to T modulators (MODs) 332a through 332t. Each modulator 332 may process a respective output symbol stream (e.g., for OFDM and/or the like) to obtain an output sample stream. Each modulator 332 may further process (e.g., convert to analog, amplify, filter, and upconvert) the output sample stream to obtain a downlink signal. T downlink signals from modulators 332a through 332t may be transmitted via T antennas 334a through 334t, respectively. According to various aspects described in more detail below, the synchronization signals can be generated with location encoding to convey additional information.

At UE 104, antennas 352a through 352r may receive the downlink signals from base station 102 and/or other base stations and may provide received signals to demodulators (DEMODs) 354a through 354r, respectively. Each demodulator 354 may condition (e.g., filter, amplify, down convert, and digitize) a received signal to obtain input samples. Each demodulator 354 may further process the input samples (e.g., for OFDM and/or the like) to obtain received symbols. A MIMO detector 356 may obtain received symbols from all R demodulators 354a through 354r, perform MIMO detection on the received symbols if applicable, and provide detected symbols. A receive processor 358 may process (e.g., demodulate and decode) the detected symbols, provide decoded data for UE 104 to a data sink 360, and provide decoded control information and system information to a controller/processor 380. A channel processor may determine reference signal received power (RSRP), received signal strength indicator (RSSI), reference signal received quality (RSRQ), channel quality indicator (CQI), and/or the like. In some aspects, one or more components of UE 104 may be included in a housing.

On the uplink, at UE 104, a transmit processor 364 may receive and process data from a data source 362 and control information (e.g., for reports comprising RSRP, RSSI, RSRQ, CQI, and/or the like) from controller/processor 380. Transmit processor 364 may also generate reference symbols for one or more reference signals. The symbols from transmit processor 364 may be precoded by a TX MIMO processor 366 if applicable, further processed by modulators 354a through 354r (e.g., for DFT-s-OFDM, CP-OFDM, and/or the like), and transmitted to base station 102. At base station 102, the uplink signals from UE 104 and other UEs may be received by antennas 334, processed by demodulators 332, detected by a MIMO detector 336 if applicable, and further processed by a receive processor 338 to obtain decoded data and control information sent by UE 104. Receive processor 338 may provide the decoded data to a data sink 339 and the decoded control information to controller/processor 340. Base station 102 may include communication unit 344 and communicate to a location server 172 via communication unit 344. Location server 172 may include communication unit 394, controller/processor 390, and memory 392.

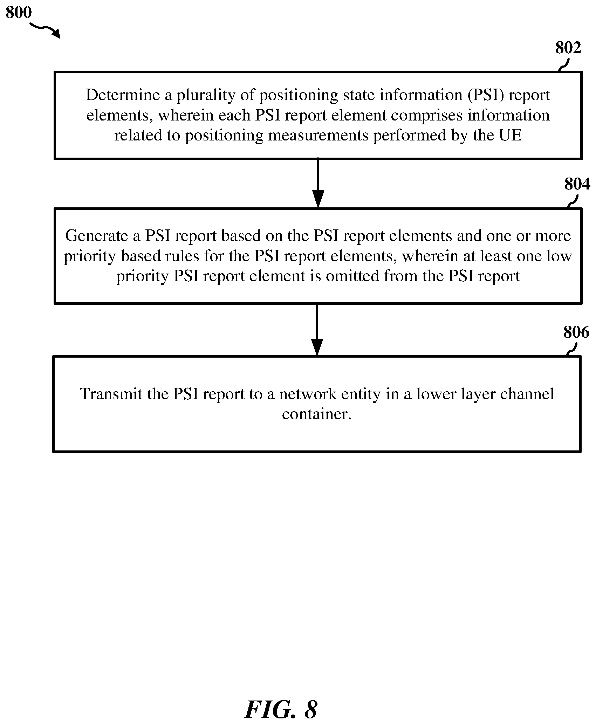

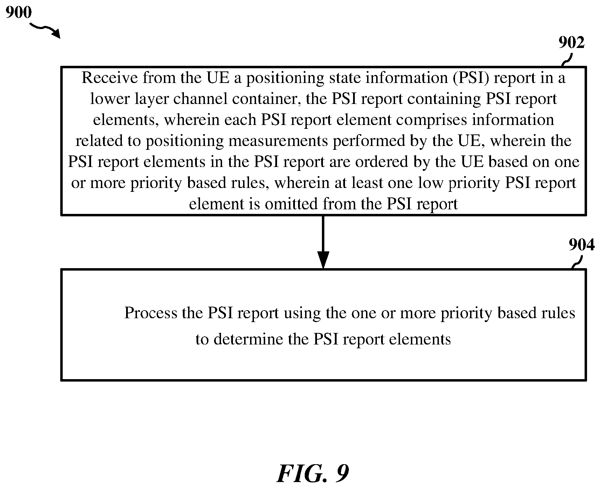

Controller/processor 340 of base station 102, controller/processor 380 of UE 104, controller/processor 390 of the location server 172 and/or any other component(s) of FIG. 3 may perform one or more techniques associated with ordering and omitting low priority positioning state information (PSI) report elements in a PSI report transmitted on a lower layer channel, as described in more detail elsewhere herein. For example, controller/processor 340 of base station 102, controller/processor 380 of UE 104, controller/processor 390 of the location server 172, and/or any other component(s) of FIG. 3 may perform or direct operations of, for example, process 800 of FIG. 8, process 900 of FIG. 9, and/or other processes as described herein. Memories 342, 382, 392 may store data and program codes for base station 102, UE 104, and location server 172, respectively. In some aspects, memory 342, memory 382, and memory 392 may comprise a non-transitory computer-readable medium storing one or more instructions for wireless communication. For example, the one or more instructions, when executed by one or more processors of the base station 102, the UE 104, or the location server 172 may perform or direct operations of, for example, process 800 of FIG. 8, process 900 of FIG. 9, and/or other processes as described herein. A scheduler 346 may schedule UEs for data transmission on the downlink and/or uplink.

As indicated above, FIG. 3 is provided as an example. Other examples may differ from what is described with regard to FIG. 3.

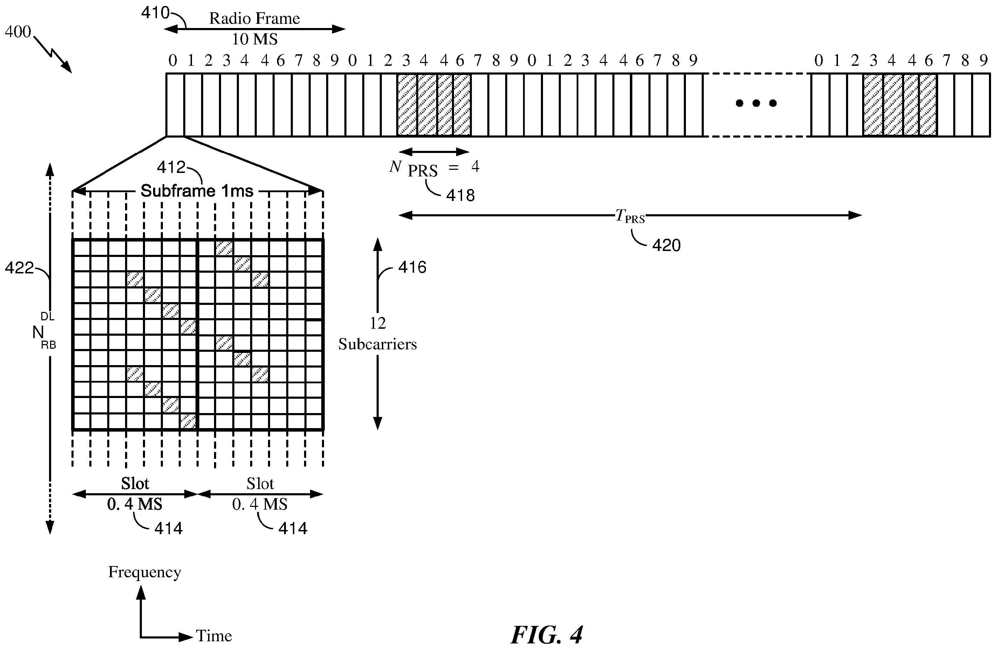

**FIG. 4** shows a structure of an exemplary subframe sequence 400 with positioning reference signal (PRS) positioning occasions, according to aspects of the disclosure. Subframe sequence 400 may be applicable to the broadcast of PRS signals from a base station (e.g., any of the base stations described herein) or other network node. The subframe sequence 400 may be used in LTE systems, and the same or similar subframe sequence may be used in other communication technologies / protocols, such as 5G NR. In FIG. 4, time is represented horizontally (e.g., on the X axis) with time increasing from left to right, while frequency is represented vertically (e.g., on the Y axis) with frequency increasing (or decreasing) from bottom to top. As shown in FIG. 4, downlink and uplink radio frames 410 may be of 10 millisecond (ms) duration each. For downlink frequency division duplex (FDD) mode, radio frames 410 are organized, in the illustrated example, into ten subframes 412 of 1 ms duration each. Each subframe 412 comprises two slots 414, each of, for example, 0.5 ms duration.

In the frequency domain, the available bandwidth may be divided into uniformly spaced orthogonal subcarriers 416 (also referred to as "tones" or "bins"). For example, for a normal length cyclic prefix (CP) using, for example, 15 kHz spacing, subcarriers 416 may be grouped into a group of twelve (12) subcarriers. A resource of one OFDM symbol length in the time domain and one subcarrier in the frequency domain (represented as a block of subframe 412) is referred to as a resource element (RE). Each grouping of the 12 subcarriers 416 and the 14 OFDM symbols is termed a resource block (RB) and, in the example above, the number of subcarriers in the resource block may be written as $N_{SC}^{RB} = 12$. For a given channel bandwidth, the number of available resource blocks on each channel 422, which is also called the transmission bandwidth configuration 422, is indicated as $N_{RB}^{DL}$. For example, for a 3 MHz channel bandwidth in the above example, the number of available resource blocks on each channel 422 is given by $N_{RB}^{DL} = 15$. Note that the frequency component of a resource block (e.g., the 12 subcarriers) is referred to as a physical resource block (PRB).

A base station may transmit radio frames (e.g., radio frames 410), or other physical layer signaling sequences, supporting PRS signals (i.e. a downlink (DL) PRS) according to frame configurations either similar to, or the same as that, shown in FIG. 4, which may be measured and used for a UE (e.g., any of the UEs described herein) position estimation. Other types of wireless nodes (e.g., a distributed antenna system (DAS), remote radio head (RRH), UE, AP, etc.) in a wireless communications network may also be configured to transmit PRS signals configured in a manner similar to (or the same as) that depicted in FIG. 4.

A collection of resource elements that are used for transmission of PRS signals is referred to as a "PRS resource." The collection of resource elements can span multiple PRBs in the frequency domain and N (e.g., 1 or more) consecutive symbol(s) within a slot 414 in the time domain. For example, the cross-hatched resource elements in the slots 414 may be examples of two PRS resources. A "PRS resource set" is a set of PRS resources used for the transmission of PRS signals, where each PRS resource has a PRS resource identifier (ID). In addition, the PRS resources in a PRS resource set are associated with the same transmission-reception point (TRP). A PRS resource ID in a PRS resource set is associated with a single beam transmitted from a single TRP (where a TRP may transmit one or more beams). Note that this does not have any implications on whether the TRPs and beams from which signals are transmitted are known to the UE.

PRS may be transmitted in special positioning subframes that are grouped into positioning occasions. A PRS occasion is one instance of a periodically repeated time window (e.g., consecutive slot(s)) where PRS are expected to be transmitted. Each periodically repeated time window can include a group of one or more consecutive PRS occasions. Each PRS occasion can comprise a number $N_{PRS}$ of consecutive positioning subframes. The PRS positioning occasions for a cell supported by a base station may occur periodically at intervals, denoted by a number $T_{PRS}$ of milliseconds or subframes. As an example, FIG. 4 illustrates a periodicity of positioning occasions where $N_{PRS}$ equals 4 418 and $T_{PRS}$ is greater than or equal to 20 420. In some aspects, $T_{PRS}$ may be measured in terms of the number of subframes between the start of consecutive positioning occasions. Multiple PRS occasions may be associated with the same PRS resource configuration, in which case, each such occasion is referred to as an "occasion of the PRS resource" or the like.

A PRS may be transmitted with a constant power. A PRS can also be transmitted with zero power (i.e., muted). Muting, which turns off a regularly scheduled PRS transmission, may be useful when PRS signals between different cells overlap by occurring at the same or almost the same time. In this case, the PRS signals from some cells may be muted while PRS signals from other cells are transmitted (e.g., at a constant power). Muting may aid signal acquisition and time of arrival (TOA) and reference signal time difference (RSTD) measurement, by UEs, of PRS signals that are not muted (by avoiding interference from PRS signals that have been muted). Muting may be viewed as the non-transmission of a PRS for a given positioning occasion for a particular cell. Muting patterns (also referred to as muting sequences) may be signaled (e.g., using the LTE positioning protocol (LPP)) to a UE using bit strings. For example, in a bit string signaled to indicate a muting pattern, if a bit at position j is set to '0', then the UE may infer that the PRS is muted for a $j^{th}$ positioning occasion.

To further improve hearability of PRS, positioning subframes may be low-interference subframes that are transmitted without user data channels. As a result, in ideally synchronized networks, PRS may be interfered with by other cells' PRS with the same PRS pattern index (i.e., with the same frequency shift), but not from data transmissions. The frequency shift may be defined as a function of a PRS ID for a cell or other transmission point (TP) (denoted as $N_{ID}^{PRS}$) or as a function of a physical cell identifier (PCI) (denoted as $N_{ID}^{cell}$) if no PRS ID is assigned, which results in an effective frequency re-use factor of six (6).

To also improve hearability of a PRS (e.g., when PRS bandwidth is limited, such as with only six resource blocks corresponding to 1.4 MHz bandwidth), the frequency band for consecutive PRS positioning occasions (or consecutive PRS subframes) may be changed in a known and predictable manner via frequency hopping. In addition, a cell supported by a base station may support more than one PRS configuration, where each PRS configuration may comprise a distinct frequency offset (*vshift*), a distinct carrier frequency, a distinct bandwidth, a distinct code sequence, and/or a distinct sequence of PRS positioning occasions with a particular number of subframes ($N_{PRS}$) per positioning occasion and a particular periodicity ($T_{PRS}$). In some implementation, one or more of the PRS configurations supported in a cell may be for a directional PRS and may then have additional distinct characteristics, such as a distinct direction of transmission, a distinct range of horizontal angles, and/or a distinct range of vertical angles.

A PRS configuration, as described above, including the PRS transmission/muting schedule, is signaled to the UE to enable the UE to perform PRS positioning measurements. The UE is not expected to blindly perform detection of PRS configurations.

Note that the terms "positioning reference signal" and "PRS" may sometimes refer to specific reference signals that are used for positioning in LTE systems. However, as used herein, unless otherwise indicated, the terms "positioning reference signal" and "PRS" refer to any type of reference signal that can be used for positioning, such as but not limited to, PRS signals in LTE, navigation reference signals (NRS), transmitter reference signals (TRS), cell-specific reference signals (CRS), channel state information reference signals (CSI-RS), primary synchronization signals (PSS), secondary synchronization signals (SSS), etc.

Similar to DL PRS transmitted by base stations, discussed above, a UE may transmit UL PRS for positioning. The UL PRS may be, e.g., sounding reference signals (SRS) for positioning. Using received DL PRS from base stations and/or UL PRS transmitted to base stations, the UE may perform various positioning methods, such as time of arrival (TOA), reference signal time difference (RSTD), time difference of arrival (TDOA), reference signal received power (RSRP), time difference between reception and transmission of signals (Rx-Tx), angle of arrival (AoA), or angle of departure (AoD), etc. In some implementations, the DL PRS and UL PRS are received and transmitted jointly to perform multi-cell positioning measurements, such as multi-Round Trip Time (RTT).

Various positioning technologies rely on DL PRS or UL PRS (or SRS for positioning). For example, positioning technologies that use reference signal include downlink based positioning, uplink based positioning, and combined downlink and uplink based positioning. For example, downlink based positioning includes positioning methods such as DL-TDOA and DL-AoD. Uplink based positioning includes positioning method such as UL-TDOA and UL-AoA. Downlink and uplink based positioning includes positioning method, such as RTT with one or more neighboring base station (multi-RTT). Other positioning methods exist, including methods that do not relay on PRS. For example, Enhanced Cell-ID (E-CID) is based on radio resource management (RRM) measurements.

3GPP Release 16 addresses techniques for positioning with high accuracy, such as using a large bandwidth, beam sweeping in Frequency Range 2 (FR2) that includes frequency bands from 24.25 GHz to 52.6 GHz, angle-based positioning methods such as AoA and AoD, and multi- RTT. Latency, however, is not addressed in depth in Release 16. For example, it is agreed in Release 16 that "UE based positioning," such as DL based positioning, saves latency. Reporting in Release 16, however, is via LPP or RRC, using mechanisms similar to LTE, and does not provide for low latency reporting. For example, LPP and RRC share physical resources and include redundancies, which is advantageous in many aspects, but inherently increases latency.

Low latency, however, is desirable for positioning. For example, latency less than 100ms or less than 10ms in some Industrial Internet of Things (IIoT) cases, may be desirable. In order to reduce latency in positioning, reporting may be performed using lower layer channels, such as layer 1 (L1), which is PHYSICAL (PHY) layer, or layer 2 (L2), which is Medium Access Control (MAC) layer, as opposed to using higher latency LPP or RRC. Lower layer reporting, for example, may be used with on-demand positioning using special physical random access channel (PRACH) sequences. The use of lower layer (L1/L2) reporting to reduce latency is beneficial for communications between the UE 104 and the base station 102. Latency issues between the UE 104 and the LMF 270 may be addressed using additional mechanisms, such as "LMF in the RAN." With LMF in the RAN, the location server is within the same Technical Specification Group (TSG) Radio Access Network (RAN). For examples the location server may be an internal function of the NG-RAN node, the location server may be a logical node within the split gNB, or the location server may a logical node in the NG-RAN, connected to NG-RAN nodes (gNBs and/or ng-eNBs) via an interface, such that it can still receive the report from the UE

Positioning measurements, however, are currently reported through high layer signaling, e.g., via layer 3 (L3), which is RRC or LPP. For example, measurement reports that may be provided through high layer signaling include, e.g., one or multiple TOA, TDOA, RSRP, Rx-Tx, AoA/AoD, multipath reporting (e.g., for ToA, RSRP, AoA/AoD), motion states (e.g., walking, driving, etc.,) and trajectories, and report quality indication.

It may be desirable to report positioning measurements, which are sometimes referred to herein as Positioning State Information (PSI) in a lower layer, e.g., L1/L2, to reduce latency. Positioning State Information may alternatively be referred to as CSI report for positioning, CSI report with positioning measurements, measurement location report, positioning measurement report, positioning information report, location information report, CSI report with location information. When reporting PSI with lower layer signaling, however, the size of the PSI report may be larger than the scheduled report container. If the PSI report does not fit within the report container, rather than dropping the entire PSI report, partial PSI omission may be used, in which a set of priority based rules are used to identify lower priority information that can be omitted from the PSI report.

In NR, Channel State Information (CSI) may be reported by a UE in a manner that lower priority information is omitted from the report. CSI is not related to positioning but provides a mechanism through which a UE reports various measured radio channel quality parameters to a network, e.g., gNB. A CSI reports several different radio channel parameters, such as Channel Quality Indicator (CQI), Pre-coding Matrix Indicator (PMI), Rank Indicator (RI), Layer Indicator (LI), L1-RSRP. The interpretation of some fields may depend on values of other fields and the CSI report consists of a set of fields in a pre-specified order. A single UL transmission, e.g., on physical uplink shared channel (PUSCH) or physical uplink control channel (PUCCH) may contain multiple reports that are arranged according to a priority, e.g., as defined 3GPP TS 38.214, which may depend on report periodicity, e.g., aperiodic, semi-persistent, periodic over PUSCH/PUCCH; type, e.g., L1-RSRP or not; serving-cell index, e.g., in a carrier aggregation case, and reportconfigID.

CSI may be reported in two parts, e.g., 2-part CSI reporting. With 2-part CSI presorting, the first part (part1) of all reports are collected together and the second part (part2) are separately collected, and each collection is separately encoded. The part 1 payload size is based on configuration parameters, while the part2 payload size depends on configuration and on the part1 contents. The number of coded bits/symbols to be output after encoding and rate matching is computed based on number of input bits and beta factors, e.g., defined in 3GPP TS 38.212. Further, linkages are defined between instances of resource sets (RS) being measured and corresponding reporting.

For PUSCH-based CSI reporting and Type II CSI reporting in particular, the CSI payload size may vary dramatically depending on the RI selection. For instance, for Type II reporting, the PMI payload for RI=2 is almost double to that of RI=1. Since the RI selection is not known to the gNB prior to scheduling an aperiodic CSI report on the PUSCH, the gNB will allocate PUSCH resources (i.e., in frequency and time domain) using a best guess of the RI selection the UE will make, e.g., perhaps by looking at historic RI reports. Thus, it is possible that the gNB may allocate PUSCH resources with the assumption that the UE will report RI=1, but the UE actually reports RI=2, which has almost twice the PMI payload size as RI=1. In that case, it is possible that the CSI payload will not fit in the PUSCH container, i.e., the code rate will be too large or even the un-coded systematic bits will not fit. Instead of dropping the entire CSI report, if the CSI payload will not fit in the PUSCH container, partial CSI omission may be used, where a portion of the CSI is omitted from the report, but the remaining position of the CSI is reported, e.g., which may provide some utility to the gNB and at least give information about the RI selection so that the gNB can allocate a proper PUSCH resource for the next aperiodic CSI request.

The CSI contents in CSI Part2 may be ordered in a predetermined fashion. For example, if multiple CSI reports are transmitted in the PUSCH, the wideband CSI components (i.e. the wideband PMI and CQI) for all the reports are mapped to the most significant bits of the Uplink Control Information (UCI). Then, the subband CSI for each report is mapped according to the priority rules, where the subband CSI for even numbered subbands are mapped first, followed by subband CSI for the odd numbered subbands. If the resulting code rate of the UCI is above a threshold, a portion of the least significant UCI bits are omitted, until the code rate falls below the threshold. Consequently, subband CSI for odd numbered subbands for a report will be omitted before the corresponding subband CSI for even numbered subbands. If the subband CSI for odd numbered subbands is omitted, the gNB will still receive subband PMI and CQI information for even number subbands in the frequency domain and can therefore interpolate the PMI/CQI between two reported subbands to try to estimate the missing PMI/CQI values for the odd numbered subbands in the middle.

Positioning state information (PSI) is different than CSI, as the type of information for positioning measurements included in a PSI report may vary greatly depending on the type of positioning measurement performed, the number of positioning measurements, the type of positioning method being supported, etc.

As discussed above, it may be desirable to report PSI on a lower layer (L1/L2) uplink channel, e.g., on a physical layer (PUSCH or PUCCH), on a MAC layer (Medium Access Control - Control Element (MAC-CE) block), or a physical sidelink shared control channel (PSSCH). The PSI report may contain one or multiple types of positioning measurements and one or multiple sets of teach type of positioning measurement. The size of a report for the positioning measurements may vary, e.g., based on the UE selection or determination of positioning measurements or reporting configuration. A PSI report may be split into two or more parts, with at least one part having a constant size, and the remaining parts having variable size. The size of the at least one part may vary, for example, because the UE 104 may detect fewer TRPs than expected or the UE may report only a subset of expected measurements, e.g., the UE may only report RSTD and not RSRP, even if the UE is configured to report both.

Because at least a portion of the PSI report may vary in size, the PSI payload may not fit in a channel container scheduled for the PSI report, e.g., in the PUSCH, PUCCH, PSSCH, or MAC-CE, i.e., the code rate will be too large or even the un-coded systematic bits will not fit. Accordingly, the PSI report elements may be ordered in a predetermined fashion, e.g., according to priority base rules, so that the lower priority PSI elements in the variable-sized part or the report will be omitted from the PSI report before high priority elements. For example, the PSI report elements may be mapped to the channel container according to the priority rules, where higher priority PSI report elements are mapped first, followed by successively lower priority PSI report elements. If the resulting code rate of the PSI report is above a threshold, e.g., based on the size of the channel container, the lowest priority PSI report element is omitted, until the code rate falls below the threshold. The recipient may receive the PSI report and process the PSI report according to the priority base rules.

Types of positioning measurements or information that may be included in a PSI report includes, e.g., timing measurements, such RSTD, UE Rx-Tx, TOA, etc., energy measurements, such as RSRP, quality metrics, velocity and/or trajectory measurements, reference TRP, multipath information, line of sight (LOS) or non-line of sight (NLOS) factors, signal to interference noise ratio (SINR), and time stamps. It should be understood that this list is not exhaustive, and that other types of positioning measurements or information may be desirable to include in a PSI report. Each positioning measurements may be reported as one or more vectors, e.g., each vector being a set of one or more measurements associated with at least one of a same time, a same TRP, same beam, same frequency band, same antenna, or a combination thereof. Thus, for example, an RSTD vector may be indicated as {RSTD1, RSTD2 ... RSTDN) which are all associated with a timestamp1, and may be from the same or different TRPs, since there is the case that the UE reports multiple RSTDs for the same TRPs.

The priority based rules may be configurable, e.g., by the base station or the UE or may be static, e.g., stored in memory in the UE and a network entity that receives the PSI report. Examples of the priority based rules for ordering the PSI report elements, may include one or more of the following.

Rule 1: A first type of positioning measurement has higher priority than a second type of positioning measurement. In one implementation, for example, timing measurements may have a higher priority than energy measurements. For example, RSTDs across TRPs may have priority over the RSRPs across TRPs, or UE Rx-Tx across TRPs may have priority over the RSRPs across TRPs. Moreover, one type of timing positioning measurement may have priority over another type of timing positioning measurement, e.g., RSTDs across TRPs have priority over the UE Rx-Tx across TRPs. Similarly, one type of energy positioning measurement may have priority over another type of energy positioning measurement.

Rule 2: Quality metrics may have a lower priority compared to the positioning measurement to which they refer. For example, the UE 104 may first order the positioning measurements vectors followed by the quality metric vector. For example, if the UE 104 is to report ten RSTD vectors with associated quality metric vectors, the UE 104 may order the report as: RSTD1, RSTD2, ... RSTD10, Quality1, Quality2, ...Quality10.

Rule 3: A serving base station, e.g., TRP (or reference TRP) measurement has priority over the neighboring TRPs measurements. For example, when reporting ten TOA measurements, the UE 104 may report TOA1, TOA2, ... TOA10, where the first TOA measurement, e.g., "TOA1," corresponds to the serving or reference TRP.

Rule 4: The identifier for the reference base station (TRP), PRS resource, or PRS resource set has a higher priority than all positioning measurements. Thus, the identifier for the TRP, PRS resource or PRS resource that the UE selects as a reference is reported before any positioning measurements.

Rule 5: Priority of a PSI reporting element is based on the configured positioning method. For example, if the UE 104 is configured for TDOA, then RSTD positioning measurements have higher priority than RSRP measurements. If the UE 104 is configured for AoD, then an RSRP positioning measurements have higher priority than RSTD measurements. If the UE 104 is configured for multi-RTT, then Rx-Tx positioning measurements have a higher priority than RSRP measurements. The priority may be further based on multiple positioning methods, e.g., if the UE 104 is configured for hybrid positioning methods. For example, if the UE 104 is configured for TDOA and multi-RTT, then an RSTD positioning measurement may have a higher priority than Rx-Tx measurements.

Rule 6: The multipath reporting or the LOS/NLOS determination factors have a lower priority than the first-path reporting. Examples of first path reporting for example, may include RSTD, UE Rx-Tx, RSRP, and examples of multi-path reporting may include the difference between second path positioning measurement with respect to the first path positioning measurement. Thus, the UE 104 may order the PSI reporting elements with all RSTD, Rx-Tx, RSRP vectors, then, the quality metrics (if Rule 2 is applied), and then the multi-path reporting.

Rule 7: The UE may receive the configuration of the priority rules for each positioning measurement type. The configuration, for example, may be received from the location server, e.g., LMF 270, or the serving gNB or TRP, or from a sidelink UE. For example, the UE 104 may receive a configuration with the order the positioning measurement types.

Rule 8: When the UE 104 reports a positioning measurement vector, the corresponding time-stamp is reported with the positioning measurement vector. For example, if the UE 104 is reporting an RSTD vector and an RSRP vector and their timestamps, the UE 104 may report RSTD1, RSTD2, ... RSTD10, TimeStampRSTD, RSRP1, RSRP2, ..., RSRP10, TimeStampRSRP.

Rule 9: Measurement vectors from different types of positioning measurements are interleaved. For example, if the UE 104 is expected to report two RSTD vectors (e.g., from two different frequency layers), and one Rx-Tx vector, the vectors from the different type of positioning measurements are interleaved, e.g., RSTD vector1, Rx-Tx vector1, RSTD vector2.

Rule 10: The UE 104 may determine the order configuration of the positioning measurement types and report the order configuration with the PSI report. The order configuration may be reported, e.g., in a first part of the report having a fixed size so that the report is not omitted.

In some implementations, all of the above-rules may be used together. In other implementations, only a subset of rules may be used. As an example, the UE 104 may order PSI report elements based on the priority based rules such as those described above as shown in the following table, where priority 0 is the highest priority and priority 9 is the lowest priority.

TABLE 1

| Priority 0 Reference TRP, and/or |
| --- |
| Priority 1 |

(continued)

| One or more RSTD vector(s) and their timestamps, and/or |
| --- |
| Priority 2<br>One or more UE Rx-Tx vector(s) and their timestamps, and/or |
| Priority 3<br>One or more RSRP vector(s) and their timestamps, and/or |
| Priority 4<br>One or more Quality Metrics, and/or |
| Priority 5<br>One or more velocity vector(s) and their timestamps, and/or |
| Priority 6<br>One or more TOA vector(s) and their timestamps, and/or |
| Priority 7<br>One or more multipath vectors and their timestamps, and/or |
| Priority 8<br>One or more LOS/NLOS factors and their timestamps, and/or |
| Priority 9<br>One or more SINR |

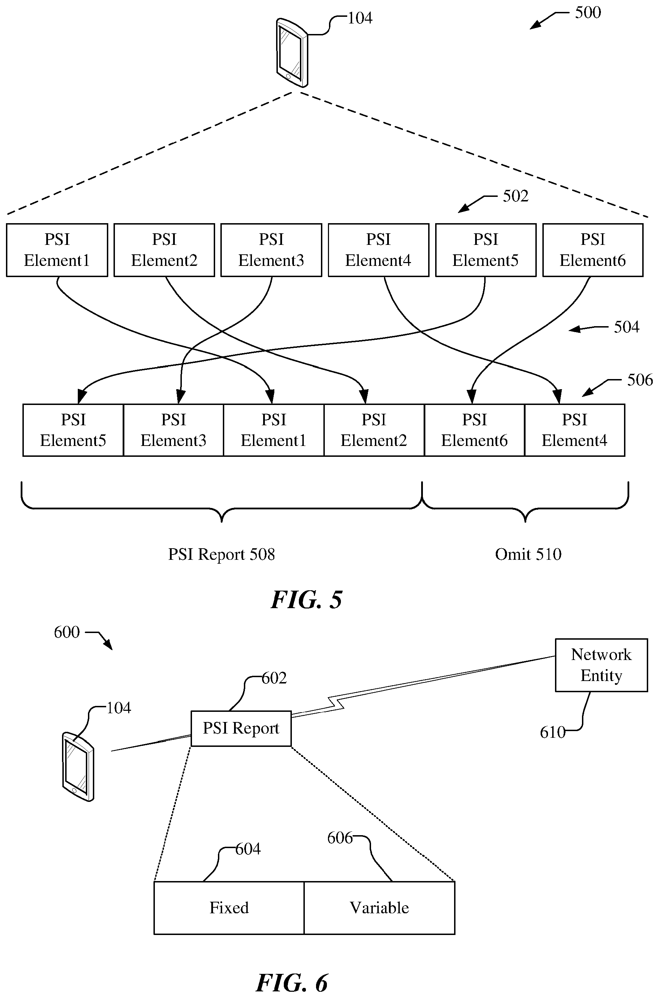

**FIG. 5** is a block diagram 500 illustrating a UE 104 configured to order and omit low priority PSI report elements in a PSI report to be transmitted on a lower layer channel according to one aspect of the present disclosure. As illustrated, the UE 104 may determine a plurality of PSI report elements 502. Each PSI report element, for example, includes information related to positioning measurements performed by the UE 104. As discussed above, a PSI report element may include, e.g., RSTD vector(s), UE Rx-Tx vector(s), RSRP vector(s), positioning measurement quality metrics vector(s), velocity vector(s), reference TRP, TOA vector(s), multipath vectors, LOS/NLOS factors, SINR vector(s), or time-stamp(s). As illustrated by arrows 504, the PSI report elements are ordered by the UE 104 according to priority based rules, such as the rules discussed above, resulting in ordered PSI elements 506, with highest priority PSI report elements shown on the left, and lowest priority PSI report elements shown on the right. In the present example, the size of the ordered PSI report elements is larger than a lower layer channel container, e.g., a PUSCH, PUCCH, or PSSCH, or in a MAC-CE, in which the PSI report is to be transmitted. Accordingly, the UE 104 generates the PSI report 508 including the higher priority PSI report elements and omits 510 the lower priority PSI elements, e.g., PSI element6 and PSI element4, from the PSI report. When omitting a PSI report element at a particular priority level, the UE 104 omits all of the information at that priority level. For example, the PSI report elements may be mapped to the channel container according to the priority rules, where higher priority PSI report elements are mapped first, followed by successively lower priority PSI report elements. If the resulting size of the PSI report is above the size of the channel container, the lowest priority PSI report element is omitted, until the size of the resulting PSI report fits in the channel container.

**FIG. 6** is a block diagram 600 illustrating a UE 104 and network entity 610 configured to respectively transmit and receive on a lower layer channel a PSI report 602 with PSI report elements ordered based on priority and with low priority PSI report elements omitted from the PSI report, according to an aspect of the present disclosure. As illustrated in FIG. 6, the UE 104 may transmit a prepared PSI report 602 to a network entity 610. The network entity 610 that receives the PSI report may be, e.g., a base station, such as base station 102 or a location server such as location server 172 or LMF 270, or a sidelink UE. The PSI report 602 is transmitted in a lower layer channel container, and contains a plurality of ordered PSI report elements, which of which includes information related to positioning measurements performed by the UE. As illustrated in FIG. 5, the PSI report elements in the PSI report 602 are ordered by the UE based on priority based rules, wherein at least one low priority PSI report element is omitted from the PSI report 602.

As illustrated, the PSI report 602 may be divided into two or more parts, with at least one part having a constant size, and the remaining parts having variable size. For example, as illustrated in FIG. 6, a first part 604 of the PSI report 602 includes PSI report elements or information having a fixed size. For example, in some implementations, the UE 104 may configure the priority based rules and may include the priority based rules configuration in the first part 604 of the PSI report 602, along with other reporting information that does not change in size independent of what the UE reports, e.g., reporting configuration of what is included in part 2. A second part 606 of the PSI report 602 includes PSI report elements that may have variable size, wherein the PSI report elements that are omitted from the PSI report 602 are omitted from the second part 606.

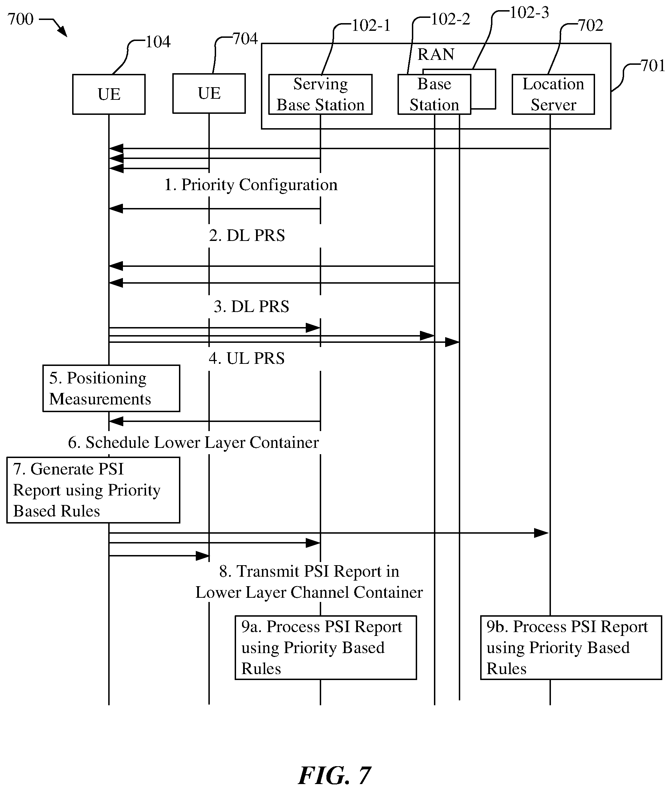

**FIG. 7** is a message flow 700 with various messages sent between components of the communication system 100 depicted in FIG. 1, illustrating the ordering and omission of low priority PSI report elements in a PSI report that is transmitted on a lower layer channel, according to the disclosure herein. Location server 702 may be, e.g., location server 172 shown in FIG. 1 or LMF 270 shown in FIG. 2. The serving base station 102-1 and other base stations 102-2, 102-3 are sometimes collectively referred to as base stations 102. UE 704 may be a UE that is in sidelink communication with the UE 104. The UE 104 may be configured to perform UE assisted positioning or UE based positioning, using downlink based positioning, uplink based positioning or combined downlink and uplink based positioning. In the message flow 700, it is assumed, unless otherwise stated, that the UE 104 and location server 702 may communicate using lower layer channels as well as other mechanisms, such as LMF in the RAN, as discussed above, to reduce latency. For example, the location server 702 may be within the RAN 701, e.g., as an internal function of an NG-RAN node, such as serving base station 102-1, the location server 702 may be a logical node within the split gNB, e.g., serving base station 102-1, or the location server may be a logical node in the NG-RAN 701, connected to NG-RAN nodes, e.g., serving base station 102-1 and neighboring base stations 102-2 and 102-3 via an interface, such that it can still receive the report from the UE. It should be understood that preliminary or additional conventional stages not shown in FIG. 7 may be performed, such as capability requests and responses, requests for and providing assistance data, etc.

At stage 1, the UE 104 may receive a configuration for the priority based rules used to order the PSI report elements. The configuration, e.g., may be provided by either serving base station 102-1, the location server 702, or the sidelink UE 704.

At stage 2 and stage 3, the UE 104 receives DL PRS from serving base station 102-1 and neighboring base stations 102-2 and 102-3.

At stage 4, the UE 104 may optionally transmit UL PRS or SRS for positioning, to the base stations 102.

At stage 5, the UE 104 may perform DL positioning measurements for one or more positioning methods based on the DL PRS received at stages 2 and 3, UL positioning measurements for one or more positioning methods based on the UL PRS transmitted at stage 4, or DL and UL positioning measurements for one or more positioning methods based on the DL PRS received at stages 2 and 3 and the UL PRS transmitted at stage 4. In some implementations, the UE 104 may perform multiple positioning measurements, e.g., the same type of positioning measurements at different times and/or different types of positioning measurements at the same time or at different times. By way of example, the positioning information obtained by UE 104 from the positioning measurements include one or more of, timing measurements such as RSTD, UE Rx-Tx, TOA, etc., energy measurements such as RSRP, quality metrics, velocity and/or trajectory measurements, reference TRP, multipath information, LOS/NLOS factors, SINR, and time stamps. The positioning measurements may be for one or more positioning methods for which the UE 104 is configured, such as TDOA, AoD, multi-RTT, hybrid positioning methods, etc.

At stage 6, the UE 104 may receive, e.g., from the serving base station 102-1 a schedule or grant for a lower layer container in which the PSI report is to be transmitted by the UE 105.

At stage 7, the UE 104 generates a PSI report based on the priority based rules and the positioning measurements. As discussed above, the UE 104 may generate a plurality of PSI report elements based on the positioning measurements from stage 5. The UE 104 orders the PSI report elements according to priority based rules. For example, the configuration of the priority based rules may be received from the network entity in stage 1, or the UE may generate the priority based rules configuration based on positioning measurement type, or the priority base rules may be fixed in the UE. The UE 104 generates the PSI report using the ordered PSI report elements. If the size of the PSI report elements is greater than can be accommodated by the scheduled lower layer channel container, the UE 104 omits at least one low priority PSI report element when generating the PSI report so that the PSI report fits within the lower layer channel container. The PSI report may be divided into a plurality of parts, as illustrated in FIG. 6, where at least one part may have a constant size and the remaining parts may have a variable size. The low priority PSI report elements that are omitted from PSI report, for example, may be omitted from the remaining parts of the PSI report with the variable size. If the UE 104 generated the priority based rules configuration, the priority based rules configuration may be included in the PSI report.

At stage 8, the UE 104 transmits the PSI report in the lower layer channel container, e.g., to the sidelink UE 704, the serving base station 102 or the location server 702 on an uplink. For example, the UE 104 may transmit the PSI report using a PHY layer, e.g., using PUSCH, PUCCH, PSSCH, or on a MAC layer, using a MAC-CE. Transmission of the PSI report on the lower layer channel, advantageously reduces latency compared to transmission, e.g. on an RRC channel.

At one of stage 9a and stage 9b, the PSI report is processed, e.g., by the serving base station 102-1 or the location server 702, respectively, using the priority based rules to determine the PSI report elements.

**FIG. 8** shows a flowchart for an exemplary method 800 for wireless communications for a UE, such as UE 104, performed by the UE in a manner consistent with disclosed implementation.

At block 802, the UE determines a plurality of positioning state information (PSI) report elements, wherein each PSI report element comprises information related to positioning measurements performed by the UE, e.g., as discussed at stage 5 of FIG. 7. At block 804, a PSI report is generated based on the PSI report elements and one or more priority based rules for the PSI report elements, e.g., from highest priority to lowest priority, wherein at least one low priority PSI report element is omitted from the PSI report, e.g., as discussed in FIG. 5 and at stage 7 of FIG. 7. For example, the PSI report elements may be ordered by the UE according to one or more priority based rules, e.g., as discussed in FIG. 5 and at stage 7 of FIG. 7. At block 806, the PSI report is transmitted to a network entity, such as another UE, a serving base station, or a location server, in a lower layer channel container, e.g., as discussed in FIG. 6 and at stage 8 of FIG. 7.

In one implementation, a size of all of the PSI report elements is larger than the lower layer channel container and the at least one low priority PSI report element is omitted from the PSI report so that remaining PSI report elements fit within the lower layer channel container, e.g., as discussed in FIG. 5 and at stage 7 of FIG. 7.

In one implementation, the lower layer channel container may be either a physical layer channel container or a Medium Access Control - Control Element (MAC-CE) block. For example, the physical layer channel container may be a physical uplink shared channel (PUSCH), a physical uplink control channel (PUCCH), or a physical sidelink shared channel (PSSCH).

In one implementation, the PSI report may be divided into a plurality of parts, with at least one part having a constant size and remaining parts having a variable size, and wherein the at least one low priority PSI report element is omitted from the remaining parts of the PSI report, e.g., as discussed in FIG. 6 and at stage 7 of FIG. 7.

In one implementation, the information related to positioning measurements performed by the UE in the PSI report elements may be one or more of: at least one Reference Signal Time Difference (RSTD) vector; at least one UE receive-transmit time difference (Rx-Tx) vector; at least one reference signal receive power (RSRP) vector; at least one quality metric vector; at least one velocity vector; a reference Transmission Reception Point (TRP); at least one Time of Arrival (TOA) vector; at least one multipath vector; at least one Line of Sight (LOS) / Non-Line of Sight (NLOS) factor; at least one Signal to Interference Noise Ratio (SINR) vector; at least one time-stamp, wherein a vector is a set of one or more measurements associated with at least one of a same time, a same TRP, same beam, same frequency band, same antenna, or a combination thereof.

In one implementation, the one or more priority based rules may be a first type of positioning measurement has a higher priority than a second type of measurement. For example, the first type of positioning measurement may be timing measurements and the second type of measurement may be energy measurements.

In one implementation, the one or more priority based rules may be a quality metric has a lower priority than a positioning measurement associated with the quality metric.

In one implementation, the one or more priority based rules may be a positioning measurement related to a serving or reference Transmission Reception Point (TRP) has a higher priority than a positioning measurement related to a neighboring TRP.

In one implementation, the one or more priority based rules may be an identifier associated with a reference Transmission Reception Point (TRP), positioning reference signal (PRS) resource, or PRS resource set and that has a higher priority than all positioning measurements.

In one implementation, the one or more priority based rules may be configured based on positioning method.

In one implementation, the one or more priority based rules may be a multipath reporting or Line of Sight (LOS) / Non-Line of Sight (NLOS) factors have a lower priority than first-path reporting.

In one implementation, the UE may further receive a priority based rules configuration based on positioning measurement type from the network entity, wherein the PSI report elements are ordered based on the priority based rules configuration, e.g., as discussed at stage 1 of FIG. 7.

In one implementation, the one or more priority based rules may be reporting a time stamp corresponding to each positioning measurement vector with a lower priority than the positioning measurement vector, wherein a vector is a set of one or more measurements associated with at least one of a same time, a same TRP, same beam, same frequency band, same antenna, or a combination thereof.

In one implementation, the one or more priority based rules may be that measurement vectors for different types of positioning measurements are interleaved.

In one implementation, the UE may generate a priority based rules configuration based on positioning measurement type, wherein the one or more priority based rules used to order the PSI report elements is based on the priority based rules configuration, and wherein the PSI report comprises an indication of the priority based rules configuration, e.g., as discussed at stage 7 and 8 of FIG. 7.

In one implementation, network entity may be one of a serving base station in a Radio Access Network (RAN), a location server in the RAN, or a second UE in communication with the UE, e.g., in sidelink communication.

**FIG. 9** shows a flowchart for an exemplary method 900 for wireless communications for a UE, such as UE 104, performed by a network entity in a wireless network, such as serving base station in a RAN, e.g., base station 102, or a location server with the RAN, such as location sever 172 or LMF 270, or a UE in sidelink communication with the UE, in a manner consistent with disclosed implementation.

At block 902, the network entity receives from the UE a positioning state information (PSI) report in a lower layer channel container, the PSI report containing PSI report elements, wherein each PSI report element comprises information related to positioning measurements performed by the UE, wherein the PSI report elements in the PSI report are ordered by the UE based on one or more priority based rules, wherein at least one low priority PSI report element is omitted from the PSI report, e.g., as discussed at stages 7 and 8 of FIG. 7. At block 904, the network entity processes the PSI report using the one or more priority based rules to determine the PSI report elements, e.g., as discussed at stages 9a and 9b of FIG. 7.

In one implementation, a size of the ordered PSI report elements is larger than the lower layer channel container and the at least one low priority PSI report element is omitted from the PSI report so that remaining ordered PSI report elements fit within the lower layer channel container, e.g., as discussed in FIG. 5 and at stage 7 of FIG. 7.

In one implementation, the lower layer channel container may be either a physical layer channel container or a Medium Access Control - Control Element (MAC-CE) block. For example, the physical layer channel container may be a physical uplink shared channel (PUSCH), a physical uplink control channel (PUCCH), or a physical sidelink shared channel (PSSCH).

In one implementation, the PSI report may be divided into a plurality of parts, with at least one part having a constant size and remaining parts having a variable size, and wherein the at least one low priority PSI report element is omitted from the remaining parts of the PSI report, e.g., as discussed in FIG. 6 and at stage 7 of FIG. 7.

In one implementation, the information related to positioning measurements performed by the UE in the PSI report elements may be one or more of: at least one Reference Signal Time Difference (RSTD) vector; at least one UE receive-transmit time difference (Rx-Tx) vector; at least one reference signal receive power (RSRP) vector; at least one quality metric vector; at least one velocity vector; a reference Transmission Reception Point (TRP); at least one Time of Arrival (TOA) vector; at least one multipath vector; at least one Line of Sight (LOS) / Non-Line of Sight (NLOS) factor; at least one Signal to Interference Noise Ratio (SINR) vector; at least one time-stamp, wherein a vector is a set of one or more measurements associated with at least one of a same time, a same TRP, same beam, same frequency band, same antenna, or a combination thereof.

In one implementation, the one or more priority based rules may be a first type of positioning measurement has a higher priority than a second type of measurement. For example, the first type of positioning measurement may be timing measurements and the second type of measurement may be energy measurements.

In one implementation, the one or more priority based rules may be a quality metric has a lower priority than a positioning measurement associated with the quality metric.

In one implementation, the one or more priority based rules may be a positioning measurement related to a serving or reference Transmission Reception Point (TRP) has a higher priority than a positioning measurement related to a neighboring TRP.

In one implementation, the one or more priority based rules may be an identifier associated with a reference Transmission Reception Point (TRP), positioning reference signal (PRS) resource, or PRS resource set and that has a higher priority than all positioning measurements.

In one implementation, the one or more priority based rules may be configured based on positioning method.

In one implementation, the one or more priority based rules may be a multipath reporting or Line of Sight (LOS) / Non-Line of Sight (NLOS) factors have a lower priority than first-path reporting.

In one implementation, the network entity may transmit a priority based rules configuration based on positioning measurement type to the UE, wherein the one or more priority based rules used to order the PSI report elements is based on the priority based rules configuration.

In one implementation, the one or more priority based rules may be reporting a time stamp corresponding to each measurement vector, wherein a vector is a set of one or more measurements associated with at least one of a same time, a same TRP, same beam, same frequency band, same antenna, or a combination thereof.

In one implementation, the one or more priority based rules may be that measurement vectors for different types of positioning measurements are interleaved.

In one implementation, the network entity may further receive a priority based rules configuration based on positioning measurement type from the UE in the PSI report, wherein the one or more priority based rules used to order the PSI report elements is based on the priority based rules configuration, e.g., as discussed at stage 7 and 8 of FIG. 7.

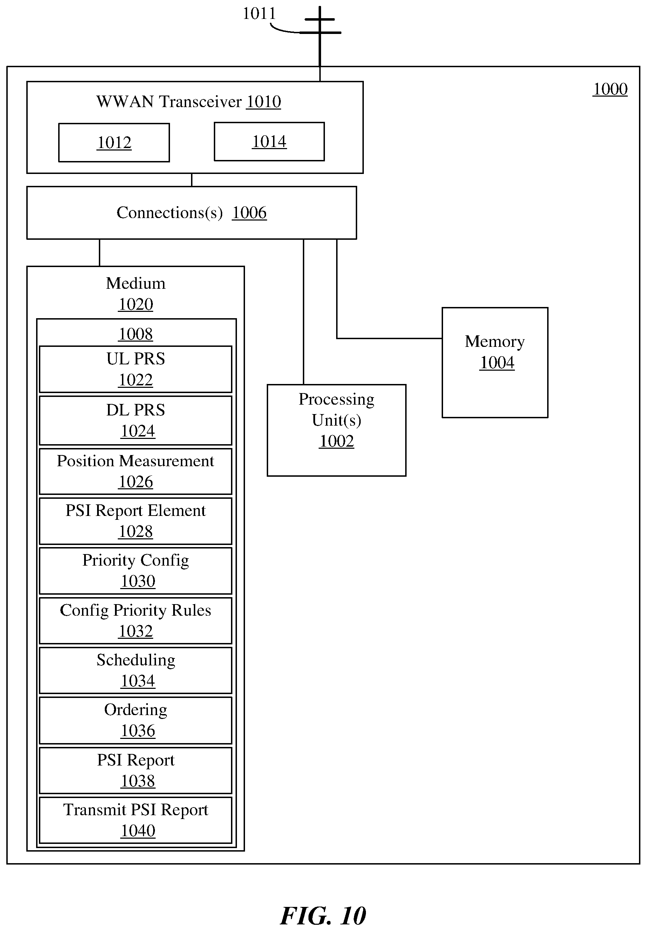

**FIG. 10** shows a schematic block diagram illustrating certain exemplary features of a UE 1000, e.g., which may be UE 104 shown in FIG. 1, enabled to order and omit low priority PSI report elements in a PSI report that is transmitted on a lower layer channel, according to the disclosure herein. UE 1000 may, for example, include one or more processors 1002, memory 1004, an external interface such as a wireless transceiver 1010 (e.g., wireless network interface), which may be operatively coupled with one or more connections 1006 (e.g., buses, lines, fibers, links, etc.) to non-transitory computer readable medium 1020 and memory 1004. The UE 1000 may further include additional items, which are not shown, such as a user interface that may include e.g., a display, a keypad or other input device, such as virtual keypad on the display, through which a user may interface with the UE, or a satellite positioning system receiver. In certain example implementations, all or part of UE 1000 may take the form of a chipset, and/or the like. Wireless transceiver 1010 may, for example, include a transmitter 1012 enabled to transmit one or more signals over one or more types of wireless communication networks and a receiver 1014 to receive one or more signals transmitted over the one or more types of wireless communication networks.

In some embodiments, UE 1000 may include antenna 1011, which may be internal or external. UE antenna 1011 may be used to transmit and/or receive signals processed by wireless transceiver 1010. In some embodiments, UE antenna 1011 may be coupled to wireless transceiver 1010. In some embodiments, measurements of signals received (transmitted) by UE 1000 may be performed at the point of connection of the UE antenna 1011 and wireless transceiver 1010. For example, the measurement point of reference for received (transmitted) RF signal measurements may be an input (output) terminal of the receiver 1014 (transmitter 1012) and an output (input) terminal of the UE antenna 1011. In a UE 1000 with multiple UE antennas 1011 or antenna arrays, the antenna connector may be viewed as a virtual point representing the aggregate output (input) of multiple UE antennas. UE 1000 may receive signals, e.g., DL PRS, and/or transmit UL PRS or SRS for positioning. Measurements of signals, including one or more of timing measurements, such RSTD, UE Rx-Tx, TOA, etc., energy measurements, such as RSRP, quality metrics, velocity and/or trajectory measurements, reference TRP, multipath information, line of sight (LOS) or non-line of sight (NLOS) factors, signal to interference noise ratio (SINR), and time stamps may be processed by the one or more processors 1002.

The one or more processors 1002 may be implemented using a combination of hardware, firmware, and software. For example, the one or more processors 1002 may be configured to perform the functions discussed herein by implementing one or more instructions or program code 1008 on a non-transitory computer readable medium, such as medium 1020 and/or memory 1004. In some embodiments, the one or more processors 1002 may represent one or more circuits configurable to perform at least a portion of a data signal computing procedure or process related to the operation of UE 1000.

The medium 1020 and/or memory 1004 may store instructions or program code 1008 that contain executable code or software instructions that when executed by the one or more processors 1002 cause the one or more processors 1002 to operate as a special purpose computer programmed to perform the techniques disclosed herein. As illustrated in UE 1000, the medium 1020 and/or memory 1004 may include one or more components or modules that may be implemented by the one or more processors 1002 to perform the methodologies described herein. While the components or modules are illustrated as software in medium 1020 that is executable by the one or more processors 1002, it should be understood that the components or modules may be stored in memory 1004 or may be dedicated hardware either in the one or more processors 1002 or off the processors.

A number of software modules and data tables may reside in the medium 1020 and/or memory 1004 and be utilized by the one or more processors 1002 in order to manage both communications and the functionality described herein. It should be appreciated that the organization of the contents of the medium 1020 and/or memory 1004 as shown in UE 1000 is merely exemplary, and as such the functionality of the modules and/or data structures may be combined, separated, and/or be structured in different ways depending upon the implementation of the UE 1000.

The medium 1020 and/or memory 1004 may include a UL PRS transmit module 1022 that when implemented by the one or more processors 1002 configures the one or more processors 1002 to transmit, via the wireless transceiver 1010, UL PRS or SRS for positioning.

The medium 1020 and/or memory 1004 may include a DL PRS module 1024 that when implemented by the one or more processors 1002 configures the one or more processors 1002 to receive, via the wireless transceiver 1010, DL PRS transmitted by one or more base stations.

The medium 1020 and/or memory 1004 may include a position measurement module 1026 that when implemented by the one or more processors 1002 configures the one or more processors 1002 to perform positioning measurements using received DL PRS and/or UL PRS. For example, the one or more processors 1002 may be configured to perform DL positioning measurements for one or more positioning methods based on received DL PRS, UL positioning measurements for one or more positioning methods based on transmitted UL PRS, or DL and UL positioning measurements for one or more positioning methods based on the received DL PRS and the transmitted UL PRS. Multiple positioning measurements may be performed, e.g., the same type of positioning measurements may be performed at different times and/or different types of positioning measurements may be performed at the same time or at different times. The positioning measurements may be for one or more positioning methods, such as TDOA, AoD, multi-RTT, hybrid positioning methods, etc. By way of example, the one or more processors 1002 may be configured for positioning measurements including one or more of, timing measurements such as RSTD, UE Rx-Tx, TOA, etc., energy measurements such as RSRP, quality metrics, velocity and/or trajectory measurements, reference TRP, multipath information, LOS/NLOS factors, SINR, and time stamps. In some implementations, the one or more processors 1002 may be further configured to estimate a position of the UE 1000 in a UE based positioning process using the position measurements and the locations of base stations, e.g., received in assistance data.

The medium 1020 and/or memory 1004 may include a PSI report element module 1028 that when implemented by the one or more processors 1002 configures the one or more processors 1002 to determine a plurality of PSI report elements based on information related to the positioning measurements. By way of example, the information related to positioning measurements used to determine the PSI report elements may include one or more of: at least one RSTD vector; at least one UE Rx-Tx vector; at least one RSRP vector; at least one quality metric vector; at least one velocity vector; a reference TRP; at least one TOA vector; at least one multipath vector; at least one LOS/ NLOS factor; at least one SINR vector; at least one time-stamp.

The medium 1020 and/or memory 1004 may include a priority configuration module 1030 that when implemented by the one or more processors 1002 configures the one or more processors 1002 to receive, via the wireless transceiver 1010, a priority based rules configuration based on positioning measurement type from a network entity, such as a serving base station, location server, or a sidelink UE.

The medium 1020 and/or memory 1004 may include a configure priority rules module 1032 that when implemented by the one or more processors 1002 configures the one or more processors 1002 to configure the priority rules to be used to order the PSI report elements. The configuration for the priority rules, for example, may be received from a network entity and stored in medium and/or memory 1004. The configuration for the priority rules may be generated by the UE 1000 itself and stored in medium and/or memory 1004, and may be transmitted to a network entity with the PSI report. In some implementations, the configuration for the priority rules may be static and stored in medium and/or memory 1004.

The medium 1020 and/or memory 1004 may include a scheduling module 1034 that when implemented by the one or more processors 1002 configures the one or more processors 1002 to determine a schedule for a lower layer channel container in which the PSI report is to be transmitted by the UE 1000, e.g., by receiving the grant from a serving base station, via the wireless transmitter.

The medium 1020 and/or memory 1004 may include an ordering module 1036 that when implemented by the one or more processors 1002 configures the one or more processors 1002 to order the PSI report elements, e.g., from highest priority to lowest priority, according to the priority based rules. For example, the order of the PSI report elements may be based on priorities giving to the different types of positioning measurement information.

The medium 1020 and/or memory 1004 may include a PSI report module 1038 that when implemented by the one or more processors 1002 configures the one or more processors 1002 to generate a PSI report based on the ordered PSI report elements. The one or more processors 1002 may be configured to omit at least one low priority PSI report element from the PSI report, e.g., if the size of the PSI report elements is greater than can be accommodated by the scheduled lower layer channel container. The one or more processors 1002 may be configured to divide the PSI report into a plurality of parts, where at least one part may have a constant size and the remaining parts may have a variable size, where the omitted low priority PSI report elements are omitted are omitted from the remaining parts of the PSI report with the variable size. The one or more processors 1002 may be configured to include the priority based rules configuration in the PSI report, e.g., if the priority based rules configuration is generated by the UE 1000.

The medium 1020 and/or memory 1004 may include a transmit PSI report module 1040 that when implemented by the one or more processors 1002 configures the one or more processors 1002 to transmit the PSI report in an SL or UL lower layer channel container to a network entity, such as another UE, the serving base station, or location server, via the wireless transceiver 1010. For example, the UE 104 may transmit the PSI report using a PHY layer, e.g., using PUSCH, PUCCH, PSSCH, or on a MAC layer, using a MAC-CE block.

The methodologies described herein may be implemented by various means depending upon the application. For example, these methodologies may be implemented in hardware, firmware, software, or any combination thereof. For a hardware implementation, the one or more processors 1002 may be implemented within one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, electronic devices, other electronic units designed to perform the functions described herein, or a combination thereof.

For a firmware and/or software implementation, the methodologies may be implemented with modules (e.g., procedures, functions, and so on) that perform the functions described herein. Any machine readable medium tangibly embodying instructions may be used in implementing the methodologies described herein. For example, software codes may be stored in a non-transitory computer readable medium 1020 or memory 1004 that is connected to and executed by the one or more processors 1002. Memory may be implemented within the one or more processors or external to the one or more processors. As used herein the term "memory" refers to any type of long term, short term, volatile, nonvolatile, or other memory and is not to be limited to any particular type of memory or number of memories, or type of media upon which memory is stored.

If implemented in firmware and/or software, the functions may be stored as one or more instructions or program code 1008 on a non-transitory computer readable medium, such as medium 1020 and/or memory 1004. Examples include computer readable media encoded with a data structure and computer readable media encoded with a computer program 1008. For example, the non-transitory computer readable medium including program code 1008 stored thereon may include program code 1008 to support ordering and omission of low priority PSI report elements in a PSI report that is transmitted on a lower layer channel, in a manner consistent with disclosed embodiments.. Non-transitory computer readable medium 1020 includes physical computer storage media. A storage medium may be any available medium that can be accessed by a computer. By way of example, and not limitation, such non-transitory computer readable media can comprise RAM, ROM, EEPROM, CD-ROM or other optical disk storage, magnetic disk storage or other magnetic storage devices, or any other medium that can be used to store desired program code 1008 in the form of instructions or data structures and that can be accessed by a computer; disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer readable media.

In addition to storage on computer readable medium 1020, instructions and/or data may be provided as signals on transmission media included in a communication apparatus. For example, a communication apparatus may include a wireless transceiver 1010 having signals indicative of instructions and data. The instructions and data are configured to cause one or more processors to implement the functions outlined in the claims. That is, the communication apparatus includes transmission media with signals indicative of information to perform disclosed functions.

Memory 1004 may represent any data storage mechanism. Memory 1004 may include, for example, a primary memory and/or a secondary memory. Primary memory may include, for example, a random access memory, read only memory, etc. While illustrated in this example as being separate from one or more processors 1002, it should be understood that all or part of a primary memory may be provided within or otherwise co-located/coupled with the one or more processors 1002. Secondary memory may include, for example, the same or similar type of memory as primary memory and/or one or more data storage devices or systems, such as, for example, a disk drive, an optical disc drive, a tape drive, a solid state memory drive, etc.

In certain implementations, secondary memory may be operatively receptive of, or otherwise configurable to couple to a non-transitory computer readable medium 1020. As such, in certain example implementations, the methods and/or apparatuses presented herein may take the form in whole or part of a computer readable medium 1020 that may include computer implementable code 1008 stored thereon, which if executed by one or more processors 1002 may be operatively enabled to perform all or portions of the example operations as described herein. Computer readable medium 1020 may be a part of memory 1004.

In one implementation, a UE, such as UE 1000, may be configured for wireless communications and may include a means for determining a plurality of positioning state information (PSI) report elements, wherein each PSI report element comprises information related to positioning measurements performed by the UE, which may be, e.g., the wireless transceiver 1010 and one or more processors 1002 with dedicated hardware or implementing executable code or software instructions in memory 1004 and/or medium 1020 such as the position measurement module 1026 and the PSI report element module 1028. A means for generating a PSI report based on the PSI report elements and one or more priority based rules for the PSI report elements, wherein at least one low priority PSI report element is omitted from the PSI report may be, e.g., the one or more processors 1002 with dedicated hardware or implementing executable code or software instructions in memory 1004 and/or medium 1020 such as the ordering module 1036 and the PSI report module 1038. For example, in some implementations, the UE may include a means for ordering the PSI report elements according to one or more priority based rules may be, e.g., the one or more processors 1002 with dedicated hardware or implementing executable code or software instructions in memory 1004 and/or medium 1020 such as the ordering module 1036. A means for transmitting the PSI report to a network entity in a lower layer channel container may be, e.g., the wireless transceiver 1010 and one or more processors 1002 with dedicated hardware or implementing executable code or software instructions in memory 1004 and/or medium 1020 such as the transmit PSI report module 1040.

In one implementation, the UE may further include a means for receiving a priority based rules configuration based on positioning measurement type from the network entity, wherein the one or more priority based rules used to order the PSI report elements is based on the priority based rules configuration, which may be, e.g., the wireless transceiver 1010 and one or more processors 1002 with dedicated hardware or implementing executable code or software instructions in memory 1004 and/or medium 1020 such as the priority configuration module 1030 and config priority rules module 1032.

In one implementation, the UE may further include a means for generating a priority based rules configuration based on positioning measurement type, wherein the one or more priority based rules used to order the PSI report elements is based on the priority based rules configuration, and wherein the PSI report comprises an indication of the priority based rules configuration, which may be, e.g., the wireless transceiver 1010 and one or more processors 1002 with dedicated hardware or implementing executable code or software instructions in memory 1004 and/or medium 1020 such as the priority configuration module 1030 and config priority rules module 1032, the PSI report module 1038, and the transmit PSI report module 1040.

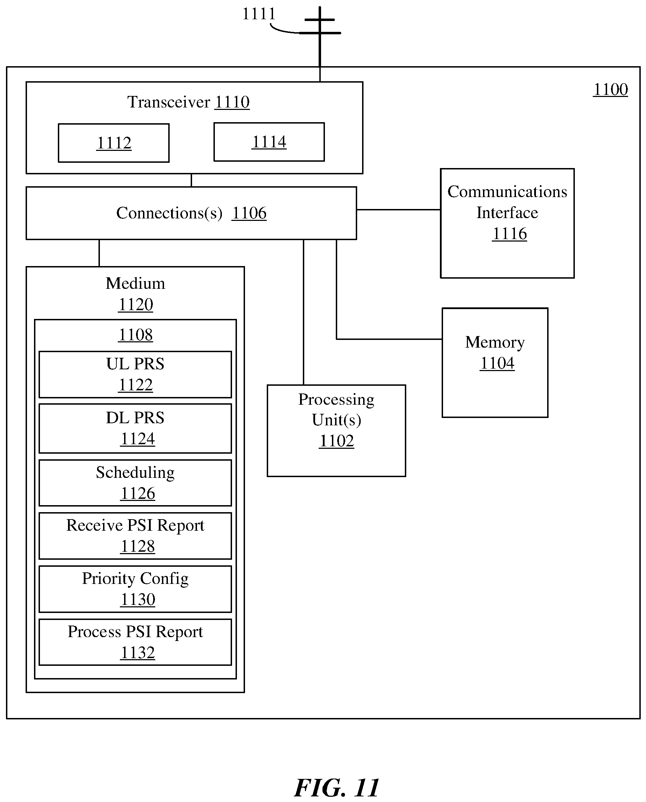

FIG. 11 shows a schematic block diagram illustrating certain exemplary features of a network entity 1100 in a wireless network enabled to support wireless communications with a UE, e.g., UE 104, to order and omit low priority PSI report elements in a PSI report that is transmitted on a lower layer channel, according to the disclosure herein. The network entity 1100, for example, may be a serving base station 102 or location server 172 or LMF 270 in FIGs. 1 and 2B, or another UE in SL communication with UE. The network entity 1100 may, for example, include one or more processors 1102, memory 1104, and an external interface, which may include a wireless transceiver 1110 (e.g., wireless network interface), e.g., if the network entity 1100 is a serving base station or sidelink UE, and/or a communications interface 1116 (e.g., wireline or wireless network interface to other network entities and/or the core network), which may be operatively coupled with one or more connections 1106 (e.g., buses, lines, fibers, links, etc.) to non-transitory computer readable medium 1120 and memory 1104. In some implementations, the network entity 1100 may further include additional items, which are not shown, such as a user interface that may include e.g., a display, a keypad or other input device, such as virtual keypad on the display, through which a user may interface with the network entity, e.g., if the network entity is a sidelink UE. In certain example implementations, all or part of network entity 1100 may take the form of a chipset, and/or the like. Wireless transceiver 1110, if present, may, for example, include a transmitter 1112 enabled to transmit one or more signals over one or more types of wireless communication networks and a receiver 1114 to receive one or more signals transmitted over the one or more types of wireless communication networks. The communications interface 1116 may be a wired or wireless interface capable of connecting to other base stations, e.g., in the RAN or network entities, such as a location server 172 shown in FIG. 1.

In some embodiments, network entity 1100 may include antenna 1111, which may be internal or external. Antenna 1111 may be used to transmit and/or receive signals processed by wireless transceiver 1110. In some embodiments, antenna 1111 may be coupled to wireless transceiver 1110. In some embodiments, measurements of signals received (transmitted) by network entity 1100 may be performed at the point of connection of the antenna 1111 and wireless transceiver 1110. For example, the measurement point of reference for received (transmitted) RF signal measurements may be an input (output) terminal of the receiver 1114 (transmitter 1112) and an output (input) terminal of the antenna 1111. In a network entity 1100 with multiple antennas 1111 or antenna arrays, the antenna connector may be viewed as a virtual point representing the aggregate output (input) of multiple antennas. In some embodiments, network entity 1100 may measure received signals, (e.g., UL PRS or SRS for positioning) including signal strength and TOA measurements and the raw measurements may be processed by the one or more processors 1102.

The one or more processors 1102 may be implemented using a combination of hardware, firmware, and software. For example, the one or more processors 1102 may be configured to perform the functions discussed herein by implementing one or more instructions or program code 1108 on a non-transitory computer readable medium, such as medium 1120 and/or memory 1104. In some embodiments, the one or more processors 1102 may represent one or more circuits configurable to perform at least a portion of a data signal computing procedure or process related to the operation of network entity 1100.

The medium 1120 and/or memory 1104 may store instructions or program code 1108 that contain executable code or software instructions that when executed by the one or more processors 1102 cause the one or more processors 1102 to operate as a special purpose computer programmed to perform the techniques disclosed herein. As illustrated in network entity 1100, the medium 1120 and/or memory 1104 may include one or more components or modules that may be implemented by the one or more processors 1102 to perform the methodologies described herein. While the components or modules are illustrated as software in medium 1120 that is executable by the one or more processors 1102, it should be understood that the components or modules may be stored in memory 1104 or may be dedicated hardware either in the one or more processors 1102 or off the processors.

A number of software modules and data tables may reside in the medium 1120 and/or memory 1104 and be utilized by the one or more processors 1102 in order to manage both communications and the functionality described herein. It should be appreciated that the organization of the contents of the medium 1120 and/or memory 1104 as shown in network entity 1100 is merely exemplary, and as such the functionality of the modules and/or data structures may be combined, separated, and/or be structured in different ways depending upon the implementation of the network entity 1100.

The medium 1120 and/or memory 1104 may include a UL PRS transmit module 1122, e.g., if the network entity 1100 is a serving base station, that when implemented by the one or more processors 1102 configures the one or more processors 1102 to receive, via the wireless transceiver 1110, UL PRS or SRS for positioning, from the UE 114.

The medium 1120 and/or memory 1104 may include a DL PRS module 1124, e.g., if the network entity 1100 is a serving base station, that when implemented by the one or more processors 1102 configures the one or more processors 1102 to transmit, via the wireless transceiver 1110, DL PRS to the UE 114.

The medium 1120 and/or memory 1104 may include a scheduling module 1126, e.g., if the network entity 1100 is a serving base station, that when implemented by the one or more processors 1102 configures the one or more processors 1102 to schedule for a lower layer channel container in which the PSI report is to be transmitted by the UE 104, and transmit the schedule or grant to the UE 104, via the wireless transmitter.

The medium 1120 and/or memory 1104 may include a receive PSI report module 1128 that when implemented by the one or more processors 1102 configures the one or more processors 1102 to receive the PSI report in a lower layer channel container from the UE 104, e.g., via the wireless transceiver 1110 if the network entity 1100 is a sidelink UE or a serving base station, or a communications interface 1116 if the network entity 1100 is a location server. The lower layer channel container, for example, may be a SL channel if the network entity 1100 is another UE, or an UL channel if the network entity 1100 is a serving base station or location server. For example, the PSI report may be received on a PHY layer, e.g., using PUSCH, PUCCH, PSSCH, or on a MAC layer, using a MAC-CE. The PSI report may include information related to positioning measurements performed by the UE 104, wherein the PSI report elements in the PSI report are ordered by the UE based on priority based rules, wherein at least one low priority PSI report element is omitted from the PSI report.

The medium 1120 and/or memory 1104 may include a priority configuration module 1130 that when implemented by the one or more processors 1102 configures the one or more processors 1102 to configure the priority rules to be used by the UE to order the PSI report elements. The configuration for the priority rules, for example, may be transmitted to the UE, e.g., via wireless transceiver 1110 or communications interface 1116. If the UE 104 generates the priority rules configuration, the one or more processors 1102 may be configured to receive the priority rules confirmation from the UE, e.g., in the PSI report. In some implementations, the configuration for the priority rules may be static and stored in medium and/or memory 1104.

The medium 1120 and/or memory 1104 may include a process PSI report module 1132 that when implemented by the one or more processors 1102 configures the one or more processors 1102 to process the PSI report based on the priority based rules to determine the PSI report elements.

The methodologies described herein may be implemented by various means depending upon the application. For example, these methodologies may be implemented in hardware, firmware, software, or any combination thereof. For a hardware implementation, the one or more processors 1102 may be implemented within one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, electronic devices, other electronic units designed to perform the functions described herein, or a combination thereof.

For a firmware and/or software implementation, the methodologies may be implemented with modules (e.g., procedures, functions, and so on) that perform the functions described herein. Any machine readable medium tangibly embodying instructions may be used in implementing the methodologies described herein. For example, software codes may be stored in a non-transitory computer readable medium 1120 or memory 1104 that is connected to and executed by the one or more processors 1102. Memory may be implemented within the one or more processors or external to the one or more processors. As used herein the term "memory" refers to any type of long term, short term, volatile, nonvolatile, or other memory and is not to be limited to any particular type of memory or number of memories, or type of media upon which memory is stored.

If implemented in firmware and/or software, the functions may be stored as one or more instructions or program code 1108 on a non-transitory computer readable medium, such as medium 1120 and/or memory 1104. Examples include computer readable media encoded with a data structure and computer readable media encoded with a computer program 1108. For example, the non-transitory computer readable medium including program code 1108 stored thereon may include program code 1108 to support a UE to order and omit low priority PSI report elements in a PSI report that is received by the network entity on a lower layer channel, in a manner consistent with disclosed embodiments. Non-transitory computer readable medium 1120 includes physical computer storage media. A storage medium may be any available medium that can be accessed by a computer. By way of example, and not limitation, such non-transitory computer readable media can comprise RAM, ROM, EEPROM, CD-ROM or other optical disk storage, magnetic disk storage or other magnetic storage devices, or any other medium that can be used to store desired program code 1108 in the form of instructions or data structures and that can be accessed by a computer; disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer readable media.

In addition to storage on computer readable medium 1120, instructions and/or data may be provided as signals on transmission media included in a communication apparatus. For example, a communication apparatus may include a wireless transceiver 1110 having signals indicative of instructions and data. The instructions and data are configured to cause one or more processors to implement the functions outlined in the claims. That is, the communication apparatus includes transmission media with signals indicative of information to perform disclosed functions.

Memory 1104 may represent any data storage mechanism. Memory 1104 may include, for example, a primary memory and/or a secondary memory. Primary memory may include, for example, a random access memory, read only memory, etc. While illustrated in this example as being separate from one or more processors 1102, it should be understood that all or part of a primary memory may be provided within or otherwise co-located/coupled with the one or more processors 1102. Secondary memory may include, for example, the same or similar type of memory as primary memory and/or one or more data storage devices or systems, such as, for example, a disk drive, an optical disc drive, a tape drive, a solid state memory drive, etc.

In certain implementations, secondary memory may be operatively receptive of, or otherwise configurable to couple to a non-transitory computer readable medium 1120. As such, in certain example implementations, the methods and/or apparatuses presented herein may take the form in whole or part of a computer readable medium 1120 that may include computer implementable code 1108 stored thereon, which if executed by one or more processors 1102 may be operatively enabled to perform all or portions of the example operations as described herein. Computer readable medium 1120 may be a part of memory 1104.

In one implementation, a network entity, such as network entity 1100, may be configured for wireless communications and may include a means for receiving from the UE a positioning state information (PSI) report in a lower layer channel container, the PSI report containing PSI report elements, wherein each PSI report element comprises information related to positioning measurements performed by the UE, wherein the PSI report elements in the PSI report are ordered by the UE based on one or more priority based rules, wherein at least one low priority PSI report element is omitted from the PSI report, which may be, e.g., the external interface including transceiver 1110 and communications interface 1116, one or more processors 1102 with dedicated hardware or implementing executable code or software instructions in memory 1104 and/or medium 1120 such as the receive PSI report module 1128. A means for processing the PSI report using the one or more priority based rules to determine the PSI report elements may be, e.g., the one or more processors 1102 with dedicated hardware or implementing executable code or software instructions in memory 1104 and/or medium 1120 such as the process PSI report module 1132.

In one implementation, the network entity may further include a means for transmitting a priority based rules configuration based on positioning measurement type to the UE, wherein the one or more priority based rules used to order the PSI report elements is based on the priority based rules configuration, which may be, e.g., the external interface including transceiver 1110 and communications interface 1116, one or more processors 1102 with dedicated hardware or implementing executable code or software instructions in memory 1104 and/or medium 1120 such as the priority configuration module 1130.

In one implementation, the network entity may further include a means for receiving a priority based rules configuration based on positioning measurement type from the UE in the PSI report, wherein the one or more priority based rules used to order the PSI report elements is based on the priority based rules configuration, which may be, e.g., the external interface including transceiver 1110 and communications interface 1116, one or more processors 1102 with dedicated hardware or implementing executable code or software instructions in memory 1104 and/or medium 1120 such as the priority configuration module 1130.

Reference throughout this specification to "one example", "an example", "certain examples", or "exemplary implementation" means that a particular feature, structure, or characteristic described in connection with the feature and/or example may be included in at least one feature and/or example of claimed subject matter. Thus, the appearances of the phrase "in one example", "an example", "in certain examples" or "in certain implementations" or other like phrases in various places throughout this specification are not necessarily all referring to the same feature, example, and/or limitation. Furthermore, the particular features, structures, or characteristics may be combined in one or more examples and/or features.

Some portions of the detailed description included herein are presented in terms of algorithms or symbolic representations of operations on binary digital signals stored within a memory of a specific apparatus or special purpose computing device or platform. In the context of this particular specification, the term specific apparatus or the like includes a general purpose computer once it is programmed to perform particular operations pursuant to instructions from program software. Algorithmic descriptions or symbolic representations are examples of techniques used by those of ordinary skill in the signal processing or related arts to convey the substance of their work to others skilled in the art. An algorithm is here, and generally, is considered to be a self-consistent sequence of operations or similar signal processing leading to a desired result. In this context, operations or processing involve physical manipulation of physical quantities. Typically, although not necessarily, such quantities may take the form of electrical or magnetic signals capable of being stored, transferred, combined, compared or otherwise manipulated. It has proven convenient at times, principally for reasons of common usage, to refer to such signals as bits, data, values, elements, symbols, characters, terms, numbers, numerals, or the like. It should be understood, however, that all of these or similar terms are to be associated with appropriate physical quantities and are merely convenient labels. Unless specifically stated otherwise, as apparent from the discussion herein, it is appreciated that throughout this specification discussions utilizing terms such as "processing," "computing," "calculating," "determining" or the like refer to actions or processes of a specific apparatus, such as a special purpose computer, special purpose computing apparatus or a similar special purpose electronic computing device. In the context of this specification, therefore, a special purpose computer or a similar special purpose electronic computing device is capable of manipulating or transforming signals, typically represented as physical electronic or magnetic quantities within memories, registers, or other information storage devices, transmission devices, or display devices of the special purpose computer or similar special purpose electronic computing device.

In the preceding detailed description, numerous specific details have been set forth to provide a thorough understanding of claimed subject matter. However, it will be understood by those skilled in the art that claimed subject matter may be practiced without these specific details. In other instances, methods and apparatuses that would be known by one of ordinary skill have not been described in detail so as not to obscure claimed subject matter.

The terms, "and", "or", and "and/or" as used herein may include a variety of meanings that also are expected to depend at least in part upon the context in which such terms are used. Typically, "or" if used to associate a list, such as A, B or C, is intended to mean A, B, and C, here used in the inclusive sense, as well as A, B or C, here used in the exclusive sense. In addition, the term "one or more" as used herein may be used to describe any feature, structure, or characteristic in the singular or may be used to describe a plurality or some other combination of features, structures or characteristics. Though, it should be noted that this is merely an illustrative example and claimed subject matter is not limited to this example.

While there has been illustrated and described what are presently considered to be example features, it will be understood by those skilled in the art that various other modifications may be made, and equivalents may be substituted, without departing from claimed subject matter if falling in the scope defined by the claims wording.

Therefore, it is intended that claimed subject matter not be limited to the particular examples disclosed, but that such claimed subject matter may also include all aspects falling within the scope of appended claims.

**Claims**

1. A method (800) for a user equipment, UE, wireless communications performed by the UE, comprising:

   determining (802) a plurality of positioning state information, PSI, report elements, wherein each PSI report element comprises information related to positioning measurements performed by the UE, the PSI report elements comprising at least one positioning timing measurement and at least one quality metric associated with the at least one positioning timing measurement;
   generating (804) a PSI report based on the PSI report elements and one or more priority based rules for the PSI report elements, wherein at least one low priority PSI report element is omitted from the PSI report, wherein in accordance with the one or more priority based rules, a quality metric has a lower priority than a positioning timing measurement associated with the quality metric; and
   transmitting (806) on a lower layer channel the PSI report to a network entity in a channel container scheduled for the PSI report.

2. A method (900) for a user equipment, UE, wireless communications performed by a network entity in a wireless network, comprising:

   receiving (902) from the UE, on a lower layer channel in a channel container scheduled for a positioning state information, PSI, report, the PSI report containing PSI report elements, the PSI report elements comprising at least one positioning timing measurement and at least one quality metric associated with the at least one positioning timing measurement performed by the UE, wherein the PSI report elements in the PSI report are ordered by the UE based on one or more priority based rules; and
   processing (904) the PSI report using the one or more priority based rules to determine the PSI report elements.

3. The method of claim 1 or 2, wherein the lower layer channel comprises either a physical layer channel or a Medium Access Control, MAC, layer channel and the channel container is either a physical layer channel container or a Medium Access Control- Control Element, MAC-CE, block, wherein the physical layer channel comprises a physical uplink shared channel, PUSCH, a physical uplink control channel, PUCCH, or a physical sidelink shared channel, PSSCH.

4. The method of claim 1 or 2, wherein the PSI report is divided into a plurality of parts, with at least one part having a constant size and remaining parts having a variable size, and wherein the at least one low priority PSI report element is omitted from the remaining parts of the PSI report.

5. The method of claim 1 or 2, wherein the positioning timing measurements in the PSI report elements comprise one or more of: at least one Reference Signal Time Difference, RSTD, vector; at least one UE receive-transmit time difference, Rx-Tx, vector; at least one Time of Arrival, TOA, vector; wherein the at least one quality metric comprises at least one quality metric vector; and wherein the PSI report elements may further comprise: a reference signal receive power, RSRP, vector; a velocity or trajectory vector; a reference Transmission Reception Point, TRP; a multipath vector; a Line of Sight, LOS, / Non-Line of Sight, NLOS, factor; a Signal to Interference Noise Ratio, SINR, vector; and a time-stamp, wherein a vector is a set of one or more measurements associated with at least one of a same time, a same TRP, same beam, same frequency band, same antenna, or a combination thereof.

6. The method of claim 1 or 2, wherein in accordance with one or more further priority based rules :

   a timing positioning measurement has a higher priority than an energy measurement;

a positioning measurement related to a serving or reference Transmission Reception Point, TRP, has a higher priority than a positioning measurement related to a neighboring TRP;an identifier associated with a reference Transmission Reception Point, TRP, positioning reference signal, PRS,) resource, or PRS resource set and that has a higher priority than positioning measurements;

a multipath reporting or Line of Sight ,(OS, / Non-Line of Sight, NLOS, factors have a lower priority than first-path reporting.

7. The method of claim 6, wherein the further one or more priority based rules are configured based on positioning method.

8. The method of claim 1 or 2, further comprising:
respectively receiving or transmitting a priority based rules configuration based on positioning measurement type from the network entity, wherein the PSI report elements are ordered based on the priority based rules configuration.

9. The method of claim 1 or 2, wherein the further one or more priority based rules comprise: reporting a time stamp corresponding to each positioning measurement vector with a lower priority than the positioning measurement vector, wherein a vector is a set of one or more measurements associated with at least one of a same time, a same TRP, same beam, same frequency band, same antenna, or a combination thereof; orinterleaving measurement vectors for different types of positioning measurements.

10. The method of claim 1, further comprising generating a priority based rules configuration based on positioning measurement type, wherein the one or more priority based rules used to order the PSI report elements is based on the priority based rules configuration, and wherein the PSI report comprises an indication of the priority based rules configuration.

11. The method of claim 2, further comprising:
transmitting a priority based rules configuration based on positioning measurement type to the UE, wherein the one or more priority based rules used to order the PSI report elements is based on the priority based rules configuration.

12. The method of claim 1 or 2, wherein the network entity comprises one of a serving base station in a Radio Access Network, RAN, a location server in the RAN, or a second UE in communication with the UE.

13. A user equipment, UE, configured for wireless communications, comprising:

means for determining a plurality of positioning state information (PSI) report elements, wherein each PSI report element comprises information related to positioning measurements performed by the UE, the PSI report elements comprising at least one positioning timing measurement and at least one quality metric associated with the at least one positioning timing measurement;
means for generating a PSI report based on the PSI report elements and one or more priority based rules for the PSI report elements, wherein at least one low priority PSI report element is omitted from the PSI report, wherein in accordance with the one or more priority based rules, a quality metric has a lower priority than a positioning timing measurement associated with the quality metric; and
means for transmitting the PSI report to a network entity on a lower layer in a channel container scheduled for the PSI report.

14. A network entity in a wireless network configured to support wireless communications of a user equipment, UE, comprising:

means for receiving from the UE a positioning state information, PSI, report on a lower layer channel in a channel container scheduled for the PSI report, the PSI report containing PSI report elements, the PSI report elements comprising at least one positioning timing measurement and at least one quality metric associated with the at least one positioning timing measurement performed by the UE, wherein the PSI report elements in the PSI report are ordered by the UE based on one or more priority based rules; and
means for processing the PSI report using the one or more priority based rules to determine the PSI report elements.

15. The UE of claim 13, wherein the means comprise: a wireless transceiver configured to wirelessly communicate with a network entity in a wireless communication system, at least one memory and at least one processor coupled to the wireless transceiver and the at least one memory, wherein the at least one processor is further configured to carry out the method of any one of claims 2 to 10 or 12; or the network entity of claim 14 wherein the means comprise an external interface configured to wirelessly communicate with the UE, at least one memory and at least one processor coupled to the external interface and the at least one memory; wherein the at least one processor is further configured to carry out the method of any of claims 3 to 9 or 11.

**Patentansprüche**

1. Verfahren (800) für drahtlose Kommunikation eines Benutzergeräts, UE, durchgeführt von dem UE, das Folgendes beinhaltet:

   Bestimmen (802) mehrerer PSI-(Position State Information)-Berichtselemente, wobei jedes PSI-Berichtselement Informationen umfasst, die sich auf von dem UE durchgeführte Positionsmessungen beziehen, wobei die PSI-Berichtselemente mindestens eine Positionszeitmessung und mindestens eine Qualitätsmetrik umfassen, die mit der mindestens einen Positionszeitmessung assoziiert ist;
   Erzeugen (804) eines PSI-Berichts auf der Basis der PSI-Berichtselemente und einer oder mehreren prioritätsbasierten Regeln für die PSI-Berichtselemente, wobei mindestens ein PSI-Berichtselement mit niedriger Priorität aus dem PSI-Bericht weggelassen wird, wobei gemäß den ein oder mehreren prioritätsbasierten Regeln eine Qualitätsmetrik eine niedrigere Priorität als eine mit der Qualitätsmetrik assoziierte Positionszeitmessung hat; und
   Übertragen (806) des PSI-Berichts auf einem Kanal einer niedrigeren Schicht zu einer Netzwerkentität in einem für den PSI-Bericht geplanten Kanalcontainer.

2. Verfahren (900) für drahtlose Kommunikation eines Benutzergeräts, UE, durchgeführt von einer Netzwerkentität in einem drahtlosen Netzwerk, das Folgendes beinhaltet:

   Empfangen (902) von dem UE, auf einem Kanal einer niedrigeren Schicht in einem für einen PSI-(Position State Information)-Bericht geplanten Kanalcontainer, des PSI-Berichtselemente enthaltenden PSI-Berichts, wobei die PSI-Berichtselemente mindestens eine Positionszeitmessung und mindestens eine Qualitätsmetrik umfassen, die mit der mindestens einen vom UE durchgeführten Positionszeitmessung assoziiert ist, wobei die PSI-Berichtselemente im PSI-Bericht vom UE auf der Basis von einer oder mehreren prioritätsbasierten Regeln geordnet werden; und
   Verarbeiten (904) des PSI-Berichts anhand der ein oder mehreren prioritätsbasierten Regeln zum Bestimmen der PSI-Berichtselemente.

3. Verfahren nach Anspruch 1 oder 2, wobei der Kanal der tieferen Schicht entweder einen Physikalische-Schicht-Kanal oder einen MAC-(Medium Access Control)-Schicht-Kanal umfasst und der Kanalcontainer entweder ein Physikalische-Schicht-Kanalcontainer oder ein MAC-CE-(Medium Access Control-Control Element)-Block ist, wobei der Physikalische-Schicht-Kanal einen PUSCH (Physical Uplink Shared Channel), einen PUCCH (Physical Uplink Control Channel) oder einen PSSCH (Physical Sidelink Shared Channel) umfasst.

4. Verfahren nach Anspruch 1 oder 2, wobei der PSI-Bericht in mehrere Teile unterteilt ist, wobei mindestens ein Teil eine konstante Größe hat und übrige Teile eine variable Größe haben, und wobei das mindestens eine PSI-Berichtselement mit niedriger Priorität aus den übrigen Teilen des PSI-Berichts weggelassen wird.

5. Verfahren nach Anspruch 1 oder 2, wobei die Positionszeitmessungen in den PSI-Berichtselementen eines oder mehrere umfassen von: mindestens einem RSTD-(Reference Signal Time Difference)-Vektor, mindestens einem UE-Rx-Tx-(Empfangs-/Sendezeitdifferenz)-Vektor, mindestens einem TOA-(Time of Arrival)-Vektor; wobei die mindestens eine Qualitätsmetrik mindestens einen Qualitätsmetrikvektor umfasst; und wobei die PSI-Berichtselemente ferner Folgendes umfassen können: einen RSRP-(Reference Signal Receive Power)-Vektor; einen Geschwindigkeits- oder Trajektorie-Vektor, einen Referenz-TRP (Transmission Reception Point), einen Mehrwegvektor; einen LOS (Line of Sight)/NLOS (Non-Line of Sight)-Faktor; einen SINR-(Signal to Interference Noise Ratio)-Vektor; und einen Zeitstempel, wobei ein Vektor ein Satz von einem oder mehreren mit mindestens einem von derselben Zeit, demselben TRP, demselben Strahl, demselben Frequenzband, derselben Antenne oder einer Kombination davon assoziierten Messwerten ist.

6. Verfahren nach Anspruch 1 oder 2, wobei gemäß einer oder mehreren weiteren prioritätsbasierten Regeln:

eine Positionszeitmessung eine höhere Priorität als eine Energiemessung hat;
eine Positionsmessung in Bezug auf einen bedienenden oder Referenz-TRP (Transmission Reception Point) eine höhere Priorität hat als eine Positionsmessung in Bezug auf einen benachbarten TRP; eine Kennung assoziiert mit einer Referenz-TRP-(Transmission Reception Point)-PRS-(Position Reference Signals)-Ressource oder einem PRS-Ressourcensatz, die/der eine höhere Priorität hat als Positionsmessungen;
eine Mehrwegnachricht oder OS (Line of Sight)/NLOS (Non-Line of Sight)-Faktoren eine niedrigere Priorität als der Erstwegbericht hat/haben.

7. Verfahren nach Anspruch 6, wobei die ein oder mehreren weiteren prioritätsbasierten Regeln auf der Basis des Ortungsverfahrens konfiguriert werden.

8. Verfahren nach Anspruch 1 oder 2, das ferner Folgendes beinhaltet:
Empfangen bzw. Senden einer Konfiguration von prioritätsbasierten Regeln auf der Basis des Positionsmesstyps von der Netzwerkentität, wobei die PSI-Berichtselemente auf der Basis der Konfiguration von prioritätsbasierten Regeln geordnet werden.

9. Verfahren nach Anspruch 1 oder 2, wobei die weiteren ein oder mehreren prioritätsbasierten Regeln Folgendes umfassen: Melden eines Zeitstempels entsprechend jedem Positionsmessvektor mit einer niedrigeren Priorität als der Positionsmessvektor, wobei ein Vektor ein Satz von einem oder mehreren Messwerten ist, die mit mindestens einem von derselben Zeit, demselben TRP, demselben Strahl, demselben Frequenzband, derselben Antenne oder einer Kombination davon assoziiert sind; oder Verschachteln von Messvektoren für verschiedene Typen von Positionsmessungen.

10. Verfahren nach Anspruch 1, das ferner das Erzeugen einer Konfiguration von prioritätsbasierten Regeln auf der Basis des Positionsmesstyps beinhaltet, wobei die ein oder mehreren zum Ordnen der PSI-Berichtselemente verwendeten prioritätsbasierten Regeln auf der Konfiguration von prioritätsbasierten Regeln basieren, und wobei der PSI-Bericht eine Angabe der Konfiguration von prioritätsbasierten Regeln umfasst.

11. Verfahren nach Anspruch 2, das ferner Folgendes beinhaltet:
Übertragen einer Konfiguration von prioritätsbasierten Regeln auf der Basis des Positionsmesstyps zu dem UE, wobei die ein oder mehreren zum Ordnen der PSI-Berichtselemente verwendeten prioritätsbasierten Regeln auf der Konfiguration von prioritätsbasierten Regeln basieren.

12. Verfahren nach Anspruch 1 oder 2, wobei die Netzwerkentität eines von einer bedienenden Basisstation in einem Funkzugangsnetz (RAN), einem Standortserver in dem RAN und einem zweiten UE in Kommunikation mit dem UE umfasst.

13. Benutzergerät, UE, konfiguriert für drahtlose Kommunikation, das Folgendes umfasst:

Mittel zum Bestimmen mehrerer PSI-(Position State Information)-Berichtselemente, wobei jedes PSI-Berichtselement Informationen umfasst, die sich auf von dem UE durchgeführte Positionsmessungen beziehen, wobei die PSI-Berichtselemente mindestens eine Positionszeitmessung und mindestens eine Qualitätsmetrik umfassen, die mit der mindestens einen Positionszeitmessung assoziiert ist;
Mittel zum Erzeugen eines PSI-Berichts auf der Basis der PSI-Berichtselemente und einer oder mehreren prioritätsbasierten Regeln für die PSI-Berichtselemente, wobei mindestens ein PSI-Berichtselement mit niedriger Priorität aus dem PSI-Bericht weggelassen wird, wobei gemäß den ein oder mehreren prioritätsbasierten Regeln eine Qualitätsmetrik eine niedrigere Priorität als eine mit der Qualitätsmetrik assoziierte Positionszeitmessung hat; und
Mittel zum Übertragen des PSI-Berichts zu einer Netzwerkentität auf einer niedrigeren Schicht in einem für den PSI-Bericht geplanten Kanalcontainer.

14. Netzwerkentität in einem drahtlosen Netzwerk, konfiguriert zum Unterstützen von drahtloser Kommunikation eines Benutzergeräts (UE), die Folgendes umfasst:

Mittel zum Empfangen, von dem UE, eines PSI-(Position State Information)-Berichts auf einem Kanal einer niedrigeren Schicht in einem für den PSI-(Position State Information)-Bericht geplanten Kanalcontainer, wobei der PSI-Bericht PSI-Berichtselemente enthält, wobei die PSI-Berichtselemente mindestens eine Positionszeitmessung und mindestens eine Qualitätsmetrik umfassen, die mit der mindestens einen vom UE durchgeführten Positionszeitmessung assoziiert ist, wobei die PSI-Berichtselemente im PSI-Bericht vom UE auf der Basis von einer oder mehreren prioritätsbasierten Regeln geordnet werden; und

Mittel zum Verarbeiten des PSI-Berichts anhand der ein oder mehreren prioritätsbasierten Regeln zum Bestimmen der PSI-Berichtselemente.

**15.** UE nach Anspruch 13, wobei die Mittel Folgendes umfassen: einen drahtlosen Transceiver, konfiguriert zum drahtlosen Kommunizieren mit einer Netzwerkentität in einem drahtlosen Kommunikationssystem, mindestens einen Speicher und mindestens einen mit dem drahtlosen Transceiver und dem mindestens einen Speicher gekoppelten Prozessor, wobei der mindestens eine Prozessor ferner zum Durchführen des Verfahrens nach einem der Ansprüche 2 bis 10 oder 12 konfiguriert ist; oder Netzwerkentität nach Anspruch 14, wobei die Mittel eine zum drahtlosen Kommunizieren mit dem UE konfigurierte externe Schnittstelle, mindestens einen Speicher und mindestens einen mit der externen Schnittstelle und dem mindestens einen Speicher gekoppelten Prozessor umfassen; wobei der mindestens eine Prozessor ferner zum Durchführen des Verfahrens nach einem der Ansprüche 3 bis 9 oder 11 konfiguriert ist.

**Revendications**

**1.** Procédé (800) de communications sans fil d'un équipement utilisateur, UE, réalisé par l'UE, comprenant :

la détermination (802) d'une pluralité d'éléments de rapport d'informations d'état de positionnement, PSI, dans lequel chaque élément de rapport de PSI comprend des informations relatives à des mesures de positionnement réalisées par l'UE, les éléments de rapport de PSI comprenant au moins une mesure de synchronisation de positionnement et au moins une métrique de qualité associée à l'au moins une mesure de synchronisation de positionnement ;
la génération (804) d'un rapport de PSI basé sur les éléments de rapport de PSI et d'une ou plusieurs règles de priorité des éléments de rapport de PSI, dans lequel au moins un élément de rapport de PSI de faible priorité est omis du rapport de PSI dans lequel, conformément aux une ou plusieurs règles de priorité, une métrique de qualité a une priorité inférieure à une mesure de synchronisation de positionnement associée à la métrique de qualité ; et
la transmission (806) sur un canal de couche inférieure du rapport de PSI à une entité de réseau dans un conteneur de canal ordonnancé pour le rapport de PSI.

**2.** Procédé (900) pour des communications sans fil d'équipement d'utilisateur, UE, réalisé par une entité de réseau dans un réseau sans fil, comprenant :

la réception (902) en provenance de l'UE, sur un canal de couche inférieure dans un conteneur de canal ordonnancé pour un rapport d'informations d'état de positionnement, PSI, du rapport de PSI contenant des éléments de rapport de PSI, d'éléments de rapport de PSI comprenant au moins une mesure de synchronisation de positionnement et au moins une métrique de qualité associée à l'au moins une mesure de synchronisation de positionnement, réalisée par l'UE, dans lequel les éléments de rapport de PSI dans le rapport de PSI sont ordonnés par l'UE sur la base d'une ou plusieurs règles de priorité ; et
le traitement (904) du rapport de PSI à l'aide des une ou plusieurs règles de priorité pour déterminer les éléments de rapport de PSI.

**3.** Procédé selon la revendication 1 ou 2, dans lequel le canal de couche inférieure comprend soit un canal de couche physique, soit un canal de couche de commande d'accès au support, MAC, et le conteneur de canal est soit un conteneur de canal de couche physique, soit un bloc de commande d'accès au support - élément de commande, MAC-CE, dans lequel le canal de couche physique comprend un canal partagé de liaison montante physique, PUSCH, un canal de commande de liaison montante physique, PUCCH, ou un canal de liaison latérale physique partagé, PSSCH.

**4.** Procédé selon la revendication 1 ou 2, dans lequel le rapport de PSI est divisé en une pluralité de parties, au moins une partie ayant une taille constante et les parties restantes ayant une taille variable, et dans lequel l'au moins un élément de rapport de PSI de faible priorité est omis des parties restantes du rapport de PSI.

**5.** Procédé selon la revendication 1 ou 2, dans lequel les mesures de synchronisation de positionnement dans les éléments de rapport de PSI comprennent un ou plusieurs : d'au moins un vecteur de différence de temps de signal de référence, RSTD ; d'au moins un vecteur de différence de temps de réception-transmission, Rx-Tx, d'UE ; d'au moins un vecteur de temps d'arrivée, TOA ; dans lequel l'au moins une métrique de qualité comprend au moins un vecteur de métrique de qualité ; et dans lequel les éléments de rapport de PSI peuvent comprendre en outre : un vecteur de puissance de réception de signal de référence, RSRP ; un vecteur de vélocité ou trajectoire ; un point de transmission-réception, TRP, de référence ; un vecteur de trajets multiples ; un facteur de ligne de visée, LOS, / non-ligne de visée, NLOS ; un vecteur de rapport signal/bruit et brouillage, SINR ; et un horodatage, dans lequel un vecteur est un ensemble d'une ou plusieurs mesures associées à au moins l'un d'un même temps, d'un même TRP, d'un même faisceau, d'une même bande de fréquence, d'une même antenne ou d'une combinaison de ceux-ci.

6. Procédé selon la revendication 1 ou 2, dans lequel, conformément à une ou plusieurs autres règles de priorité :

une mesure de positionnement de synchronisation a une priorité plus élevée qu'une mesure d'énergie ;
une mesure de positionnement liée à un point de transmission-réception, TRP, de desserte ou de référence a une priorité plus élevée qu'une mesure de positionnement liée à un PRT voisin ; un identifiant associé à une ressource de signal de référence de positionnement, PRS, ou ensemble de ressources PRS, de point de transmission-réception, TRP, et qui a une priorité plus élevée que des mesures de positionnement ;
une signalisation de trajets multiples ou des facteurs de ligne de visée, (OS, / non-ligne de visée, NLOS, ont une priorité inférieure à celle d'une signalisation de premier trajet.

7. Procédé selon la revendication 6, dans lequel les une ou plusieurs autres règles de priorité sont configurées sur la base d'un procédé de positionnement.

8. Procédé selon la revendication 1 ou 2, comprenant en outre :
la réception ou la transmission respectivement d'une configuration de règles de priorité basée sur le type de mesure de positionnement de l'entité de réseau, dans lequel les éléments de rapport de PSI sont ordonnés en fonction de la configuration des règles de priorité.

9. Procédé selon la revendication 1 ou 2, dans lequel les une ou plusieurs autres règles de priorité comprennent : la signalisation d'un horodatage correspondant à chaque vecteur de mesure de positionnement d'une priorité inférieure au vecteur de mesure de positionnement, dans lequel un vecteur est un ensemble d'une ou plusieurs mesures associées à au moins l'un d'un même temps, d'un même TRP, d'un même faisceau, d'une même bande de fréquences, d'une même antenne ou d'une combinaison de ceux-ci ; ou l'entrelacement de vecteurs de mesure pour différents types de mesures de positionnement.

10. Procédé selon la revendication l, comprenant en outre la génération d'une configuration de règles de priorité basée sur le type de mesure de positionnement, dans lequel les une ou plusieurs règles de priorité utilisées pour ordonner les éléments de rapport de PSI sont basées sur la configuration des règles de priorité, et dans lequel le rapport de PSI comprend une indication de la configuration des règles de priorité.

11. Procédé selon la revendication 2, comprenant en outre :
la transmission à l'UE d'une configuration de règles de priorité basée sur le type de mesure de positionnement, dans lequel les une ou plusieurs règles de priorité utilisées pour ordonner les éléments de rapport de PSI sont basées sur la configuration des règles de priorité.

12. Procédé selon la revendication 1 ou 2, dans lequel l'entité de réseau comprend l'un d'une station de base de desserte dans un réseau d'accès radio, RAN, d'un serveur de localisation dans le RAN, ou d'un second UE en communication avec l'UE.

13. Équipement utilisateur, UE, configuré pour des communications sans fil, comprenant :

des moyens de détermination d'une pluralité d'éléments de rapport d'informations d'état de positionnement (PSI), dans lequel chaque élément de rapport de PSI comprend des informations relatives à des mesures de positionnement réalisées par l'UE, les éléments de rapport de PSI comprenant au moins une mesure de synchronisation de positionnement et au moins une métrique de qualité associée à l'au moins une mesure de synchronisation de positionnement ;
des moyens de génération d'un rapport de PSI basé sur les éléments de rapport de PSI et une ou plusieurs règles de priorité des éléments de rapport de PSI, dans lequel au moins un élément de rapport de PSI de faible priorité est omis du rapport de PSI dans lequel, conformément aux une ou plusieurs règles de priorité, une métrique de qualité a une priorité inférieure à une mesure de synchronisation de positionnement associée à la métrique de qualité ; et

des moyens de transmission du rapport de PSI à une entité de réseau sur un canal de couche inférieure dans un conteneur de canal ordonnancé pour le rapport de PSI.

14. Entité de réseau dans un réseau sans fil configurée pour prendre en charge les communications sans fil d'un équipement utilisateur, UE, comprenant :

des moyens de réception en provenance de l'UE d'un rapport d'informations d'état de positionnement, PSI, sur un canal de couche inférieure dans un conteneur de canal ordonnancé pour le rapport de PSI, le rapport de PSI contenant des éléments de rapport de PSI, les éléments de rapport de PSI comprenant au moins une mesure de synchronisation de positionnement et au moins une métrique de qualité associée à l'au moins une mesure de synchronisation de positionnement, réalisée par l'UE, dans lequel les éléments de rapport de PSI dans le rapport de PSI sont ordonnés par l'UE sur la base d'une ou plusieurs règles de priorité ; et

des moyens de traitement du rapport de PSI à l'aide des une ou plusieurs règles de priorité pour déterminer les éléments de rapport de PSI.

15. UE selon la revendication 13, dans lequel les moyens comprennent : un émetteur-récepteur sans fil configuré pour communiquer sans fil avec une entité de réseau dans un système de communication sans fil, au moins une mémoire et au moins un processeur couplé à l'émetteur-récepteur sans fil et à l'au moins une mémoire, dans lequel l'au moins un processeur est configuré en outre pour mettre en œuvre le procédé selon l'une quelconque des revendications 2 à 10 ou 12 ; ou entité de réseau selon la revendication 14, dans laquelle les moyens comprennent une interface externe configurée pour communiquer sans fil avec l'UE, l'au moins une mémoire et l'au moins un processeur couplé à l'interface externe et à l'au moins une mémoire ; dans lequel l'au moins un processeur est configuré en outre pour mettre en œuvre le procédé selon l'une quelconque des revendications 3 à 9 ou 11.

**FIG. 1**

*FIG. 2A*

**FIG. 2B**

*FIG. 3*

*FIG. 4*

**FIG. 5**

**FIG. 6**

*FIG. 7*

**800**

**802**

Determine a plurality of positioning state information (PSI) report elements, wherein each PSI report element comprises information related to positioning measurements performed by the UE

**804**

Generate a PSI report based on the PSI report elements and one or more priority based rules for the PSI report elements, wherein at least one low priority PSI report element is omitted from the PSI report

**806**

Transmit the PSI report to a network entity in a lower layer channel container.

*FIG. 8*

900

902

Receive from the UE a positioning state information (PSI) report in a lower layer channel container, the PSI report containing PSI report elements, wherein each PSI report element comprises information related to positioning measurements performed by the UE, wherein the PSI report elements in the PSI report are ordered by the UE based on one or more priority based rules, wherein at least one low priority PSI report element is omitted from the PSI report

904

Process the PSI report using the one or more priority based rules to determine the PSI report elements

*FIG. 9*

**FIG. 10**

Transceiver <u>1110</u>

<u>1112</u>

<u>1114</u>

<u>1100</u>

Connections(s) <u>1106</u>

Communications
Interface
<u>1116</u>

Medium
<u>1120</u>

<u>1108</u>

UL PRS
<u>1122</u>

DL PRS
<u>1124</u>

Scheduling
<u>1126</u>

Receive PSI Report
<u>1128</u>

Priority Config
<u>1130</u>

Process PSI Report
<u>1132</u>

Processing
Unit(s)
<u>1102</u>

Memory
<u>1104</u>

*FIG. 11*

**REFERENCES CITED IN THE DESCRIPTION**

**Patent documents cited in the description**

- US 2018199306 A
- WO 2019137477 A
- US 2017289831 A

**Non-patent literature cited in the description**

- Discussion on Multi-TRP transmission. *R1-19007111*, 25 January 2019